# EUROPÄISCHE PATENTSCHRIFT

(11) **EP 3 453 931 B1**
(45) Veröffentlichungstag und Bekanntmachung des Hinweises auf die Patenterteilung: **02.10.2019**
(21) Anmeldenummer: 17190051.7
(22) Anmeldetag: 08.09.2017
(51) Int. Cl.: E05F 15/40, E05F 15/53, E05F 15/56, E05F 15/603, E05F 15/655

(54) **FAHRZEUGTÜR-ANTRIEBSBAUGRUPPE**
VEHICLE DOOR DRIVE ASSEMBLY
MODULE D'ENTRAÎNEMENT POUR PORTE DE VÉHICULE

(43) Veröffentlichungstag der Anmeldung: 13.03.2019
(73) Patentinhaber: Schulte, Reinhold, 33106 Paderborn (DE)
(72) Erfinder: Schulte, Reinhold, 33106 Paderborn (DE)
(74) Vertreter: REHBERG HÜPPE + PARTNER

(56) Entgegenhaltungen:
- EP-A2- 2 698 490
- US-A- 1 849 516

## Beschreibung

### TECHNISCHES GEBIET DER ERFINDUNG

Die Erfindung betrifft eine Fahrzeugtür-Antriebsbaugruppe, mittels welcher eine Öffnungs- und Schließbewegung einer Fahrzeugtür eines Fahrzeugs herbeigeführt werden kann und/oder welche bei einer manuellen Betätigung eines Notbetätigungsorgans (wie bspw. eines im Umgebungsbereich der Fahrzeugtür im Inneren des Fahrzeugs oder an der Außenseite des Fahrzeugs angeordneten Notbetätigungsschalters) eine manuelle Handnotbetätigung ermöglicht, bei welcher die Fahrzeugtür bei Aufbringung einer manuellen Öffnungs- oder Schließkraft (im Folgenden auch "Handnotbetätigungskraft") unmittelbar auf die Fahrzeugtür in Öffnungsrichtung oder Schließrichtung bewegt werden kann. Hierbei kann beispielsweise eine einzelne Fahrzeugtür oder eine doppelte Fahrzeugtür, welche auch als Flügeltür bezeichnet wird, Einsatz finden, wobei es sich bspw. auch um eine Schwenk-Schiebetür handeln kann und/oder um eine nach innen oder nach außen öffnende Fahrzeugtür. Die Fahrzeugtür-Antriebsbaugruppe wird beispielsweise in einem Omnibus oder einer Bahn eingesetzt.

### STAND DER TECHNIK

In Fahrzeugtür-Antriebsbaugruppen für Flügeltüren eines Omnibusses finden fluidische Aktuatoren Einsatz, mittels welchen die Öffnungs- und Schließbewegung der Fahrzeugtür herbeigeführt werden kann. Hierbei finden vorzugsweise doppelt wirkende Aktuatoren Einsatz mit in entgegengesetzte Richtungen wirkenden Druckkammern zur Erzeugung der Öffnungs- und Schließbewegung.

Bekannt sind hierbei Aktuatoren, welche eine translatorische Öffnungs- und Schließbewegung erzeugen (vgl. bspw. EP 2 752 545 A2), sowie Aktuatoren, bei welchen eine translatorische Bewegung eines Kolbens über eine Art Spindeltrieb umgewandelt wird in eine rotatorische Öffnungs- und Schließbewegung (vgl. DE 10 2007 025 375 B4**,** DE 10 2008 009 558 B3**,** DE 10 2008 034 994 B3 und EP 2 041 387 B1).

Um eine nicht von der fluidischen Beaufschlagung der Druckkammern der Aktuatoren abhängige Handnotbetätigung zu ermöglichen, bei welcher eine Person manuelle Handnotbetätigungskräfte auf die Fahrzeugtür aufbringen kann, finden Notbetätigungs-Ventileinrichtungen Einsatz, welche an exponierten Stellen des Fahrzeugs angeordnet sind und dort manuell betätigt werden können. Eine manuelle Notbetätigung der Notbetätigungs-Ventileinrichtung hat zur Folge, dass die Notbetätigungs-Ventileinrichtung eine Öffnungsstellung einnimmt, in welcher diese eine Kurzschlussverbindung zwischen den beiden Druckkammern des Aktuators öffnet. Die manuelle Applikation von Handnotbetätigungskräften auf die Fahrzeugtür kann in dieser Öffnungsstellung der Notbetätigungs-Ventileinrichtung zu einem Übertritt von Fluid aus einer Druckkammer in die andere Druckkammer über die Kurzschlussverbindung führen, wobei der Kolben des Aktuators infolge der manuell applizierten Handnotbetätigungskraft das Fluid von der einen Druckkammer in die andere Druckkammer drückt. Entsprechende Ausführungsbeispiele mit einem Kurzschluss der Druckkammern über eine in einer Kurzschlussverbindung angeordneten Notbetätigungs-Ventileinrichtung sind beispielsweise aus den Druckschriften EP 2 503 086 B1 und EP 2 752 545 A2 bekannt.

Die Druckschrift EP 2 698 490 A2 offenbart eine konstruktive Ausgestaltung einer Notbetätigungs-Ventileinrichtung. Die Notbetätigungs-Ventileinrichtung ist hier als 2/2-Wegeventil oder Sperrventil oder als 3/2-Wegeventil ausgebildet. Für die in EP 2 698 490 A2 dargestellte konstruktive Ausgestaltung der Notbetätigungs-Ventileinrichtung ist diese in Schieberbauweise ausgebildet, wobei der Ventilschieber eine stabile Öffnungsstellung und eine stabile Schließstellung aufweist. Im normalen Fahrbetrieb und ohne Notbetätigung ist die Schließstellung elektromagnetisch wie folgt gesichert: Der Ventilschieber verfügt in einem in eine Spule hineinragenden Endbereich über einen massiven Anker, welcher eng beabstandet von einem gehäusefesten, ebenfalls im Inneren der Spule angeordneten weiteren Anker angeordnet ist. Infolge des geringen Spaltes zwischen den beiden Ankern erstreckt sich der magnetische Fluss der Spule in der Schließstellung optimal durch die beiden Anker, so dass eine große Sicherungskraft der Schließstellung erzeugt werden kann. Eine manuelle Notbetätigung erfolgt durch einen gegen die Wirkung einer am Gehäuse abgestützten Feder manuell betätigbaren Betätigungsknopf. Die Bewegung des Betätigungsknopfes erzeugt über einen hiermit gekoppelten Stößel eine entsprechende Bewegung des Ankers des Ventilschiebers von dem gehäusefesten Anker weg bis in die Öffnungsstellung des Ventilschiebers, womit dann die manuelle Bewegung der Fahrzeugtür durch Aufbringung von Handnotbetätigungskräften ermöglicht ist. Soll nach einer derartigen Notbetätigung das Schieberventil wieder in die Schließstellung überführt werden, erfolgt dies unter stärkerer Bestromung der Spule, womit in Richtung der Schließstellung wirkende Kräfte auf den Anker des Ventilschieber wirken. Infolge der stabilen Schließstellung des Ventilschiebers bleibt diese auch bei einem etwaigen Einbruch der elektrischen Leistungsversorgung der Spule erhalten. Die EP 2 698 490 A2 offenbart die Merkmale des einleitenden Teils des Anspruchs 1.

Hinsichtlich weiteren Notbetätigungs-Ventileinrichtungen wird auch auf den in der Druckschrift EP 2 698 490 A2 angeführten Stand der Technik verwiesen.

### AUFGABE DER ERFINDUNG

Der vorliegenden Erfindung liegt die Aufgabe zugrunde, eine Fahrzeugtür-Antriebsbaugruppe für eine Fahrzeugtür eines Fahrzeugs, insbesondere eines Omnibusses oder einer Bahn, vorzuschlagen, welche
- eine Integration der Fahrzeugtür-Antriebsbaugruppe in ein zumindest teilweise elektrisches Konzept ermöglicht,
- die Möglichkeiten der funktionellen Gestaltung einer Notbetätigung zur Ermöglichung einer Handnotbetätigung erweitert,
- die Anforderungen und den Aufwand hinsichtlich der Integration der Fahrzeugtür-Antriebsbaugruppe mit Ermöglichung einer Notbetätigung in das Fahrzeug reduziert,
- hinsichtlich der Betriebssicherheit verbessert ist und/oder
- funktionelle Einbußen bei einem Einbruch einer Energieversorgung der Fahrzeugtür-Antriebsbaugruppe zumindest reduziert.

### LÖSUNG

Die Aufgabe der Erfindung wird erfindungsgemäß mit den Merkmalen des unabhängigen Patentanspruchs gelöst. Weitere bevorzugte erfindungsgemäße Ausgestaltungen sind den abhängigen Patentansprüchen zu entnehmen.

### BESCHREIBUNG DER ERFINDUNG

Im Rahmen der vorliegenden Erfindung wird unter einer **"Notbetätigung"** eine manuelle Betätigung eines Notbetätigungsorgans verstanden, welche eine Handnotbetätigung ermöglicht wird. Beispielsweise kann die Notbetätigung einen Betriebszustand einer Ventileinrichtung oder einer Kupplung verändern. Bei dem Notbetätigungsorgan handelt es sich bspw. um einen Notbetätigungsknopf oder -schalter, der insbesondere im Umgebungsbereich der Fahrzeugtür im Inneren des Fahrzeugs oder an der Außenseite des Fahrzeugs angeordnet ist, wobei auch mehrere Notbetätigungsorgane über das Fahrzeug verteilt angeordnet sein können. Möglich ist hierbei aber auch, dass alternativ oder kumulativ zu der manuellen Notbetätigung das Notbetätigungsorgan automatisiert, beispielsweise von einer elektronischen Steuereinheit des Fahrzeugs, betätigt wird, was insbesondere der Fall ist, wenn die elektronische Steuereinheit (bspw. auf Grundlage von der elektronischen Steuereinheit zugeführten Betriebs- und/oder Umgebungsgrößen des Fahrzeugs), erkennt, dass eine Handnotbetätigung erforderlich ist (bspw. im Fall eines Unfalls, eines aufgetretenen oder bevorstehenden Ausfalls einer elektrischen Leistungsversorgung u. ä.).

Im Rahmen der vorliegenden Erfindung wird unter einer **"Handnotbetätigung"** die Herbeiführung einer Öffnungs- oder Schließbewegung einer Fahrzeugtür durch manuelle Applikation einer Öffnungs- oder Schließkraft (im Folgenden auch "Handnotbetätigungskraft") unmittelbar auf die Fahrzeugtür (von innen oder von außen) durch eine Person wie einen Fahrer des Fahrzeugs oder einen Passagier verstanden, wobei vorzugsweise eine Handnotbetätigung ohne vorangegangene Notbetätigung nicht möglich ist und diese erst durch eine vorangegangene Notbetätigung ermöglicht wird.

Die erfindungsgemäße Fahrzeugtür-Antriebsbaugruppe findet Einsatz für eine Fahrzeugtür eines Fahrzeugs, insbesondere eine Flügeltür eines Omnibusses oder einer Bahn. Die Fahrzeugtür-Antriebsbaugruppe verfügt über einen Antriebsstrang, welcher dazu dient, eine Schließbewegung und eine Öffnungsbewegung der Fahrzeugtür herbeizuführen, wobei dieser auch dazu dienen kann, ohne eine vorliegende Notbetätigung eine eingenommene Betriebsstellung der Fahrzeugtür zu sichern. Der Antriebsstrang weist ein Antriebsaggregat auf, welches vorzugsweise eine mechanische Bewegung oder auch fluidische Drücke bereitstellt, welche dann in dem Antriebsstrang (ggf. unter geeigneter Umwandlung, Über- oder Untersetzung) an die Fahrzeugtür übertragen werden.

Erfindungsgemäß weist der Antriebsstrang eine Kopplungseinrichtung auf. Die Kopplungseinrichtung wird über einen elektrischen Steueranschluss betätigt. Bei Beaufschlagung dieses elektrischen Steueranschlusses über ein geeignetes erstes Steuersignal kann die Kopplungseinrichtung eine Antriebsstellung einnehmen (oder in dieser gehalten werden), in der eine Schließbewegung und/oder eine Öffnungsbewegung (vorzugsweise ausschließlich) über das Antriebsaggregat herbeiführbar ist, während eine Handnotbetätigung nicht möglich ist. Für eine Beaufschlagung des elektrischen Steueranschlusses mit einem geeigneten zweiten Steuersignal nimmt die Kopplungseinrichtung eine Notbetätigungsstellung ein (oder wird in dieser gehalten), in welcher eine Handnotbetätigung möglich ist, während dann für eine mögliche Ausgestaltung eine Schließbewegung oder eine Öffnungsbewegung nicht mehr über das Antriebsaggregat herbeiführbar ist. Hierbei wird im Rahmen der Erfindung das zweite Steuersignal für den Steueranschluss, mit welchem die Kopplungseinrichtung in der Notbetätigungsstellung überführt wird oder in dieser gehalten wird, dann erzeugt, wenn eine Notbetätigung erfolgt ist.

Des Weiteren ist in der erfindungsgemäßen Fahrzeugtür-Antriebsbaugruppe ein elektrischer Notbetätigungskreis vorgesehen. Der elektrische Notbetätigungskreis weist mindestens ein (manuell betätigtes oder automatisch, insbesondere elektrisch betätigtes) Notbetätigungsorgan auf. Des Weiteren verfügt der elektrische Notbetätigungskreis über eine elektrische Leistungsversorgung. Der elektrische Notbetätigungskreis steuert den Steueranschluss der Kopplungseinrichtung wie folgt an:
- Infolge der Ansteuerung des Steueranschlusses mit dem ersten Steuersignal nimmt die Kopplungseinrichtung die Antriebsstellung ein oder wird in dieser gehalten, wenn kein Einbruch der elektrischen Leistungsversorgung vorliegt und keine Notbetätigung des Notbetätigungsorgans vorliegt. Somit entspricht die Antriebsstellung der normalen Betriebsstellung, in welcher die Öffnungs- und Schließbewegung der Fahrzeugtür (vorzugsweise ausschließlich) über das Antriebsaggregat herbeigeführt wird.
- Hingegen steuert der elektrische Notbetätigungskreis den Steueranschluss der Kopplungseinrichtung so mit dem zweiten Steuersignal an, dass die Kopplungseinrichtung die Notbetätigungsstellung einnimmt oder in dieser gehalten wird, wenn ein Einbruch der elektrischen Leistungsversorgung vorliegt und/oder eine Notbetätigung des Notbetätigungsorgans vorliegt. Somit wird die Notbetätigungsstellung durch den elektrischen Steuerkreis gewährleistet, wenn ein Notbetrieb des Fahrzeugs vorliegt, der durch einen Einbruch der elektrischen Leistungsversorgung oder die Notbetätigung des Notbetätigungsorgans ausgelöst ist.

Die Erfindung umfasst hierbei auch Ausführungsformen, bei welchen das erste oder das zweite vorgenannten Steuersignal ein Steuerstrom oder eine Steuerspannung von Null ist oder eine sehr geringe Steuerspannung oder ein sehr geringer Steuerstrom ist. Des Weiteren umfasst die Erfindung auch Ausführungsformen, bei welchen das erste und/oder das zweite Steuersignal größer ist, wenn dieses dazu dient, die Antriebsstellung oder die Notbetätigungsstellung herbeizuführen, als wenn dieses lediglich dazu dient, eine eingenommene Antriebsstellung oder Notbetätigungsstellung zu halten.

Für die Ausgestaltung des elektrischen Notbetätigungskreises gibt es im Rahmen der Erfindung vielfältige Möglichkeiten. Für eine mögliche Ausgestaltung des elektrischen Notbetätigungskreises ist der elektrische Steueranschluss der Kopplungseinrichtung über einen oder parallele Leitungszweig(e) mit der elektrischen Leistungsversorgung und/oder dem Notbetätigungsorgan verbunden. Somit führt der Einbruch der elektrischen Leistungsversorgung unmittelbar zu einem veränderten, an dem elektrischen Steueranschluss anliegenden Steuersignal, welches dann zu der Herbeiführung der Notbetätigungsstellung der Kopplungseinrichtung genutzt werden kann. Entsprechend kann dann auch die vorzugsweise manuelle Betätigung des elektrischen Notbetätigungsorgans (welches dann bspw. als Schalter ausgebildet ist und in den Leitungszweig zwischen der elektrischen Leistungsversorgung und dem Steueranschluss angeordnet ist) ebenfalls unmittelbar zu einer Veränderung des Steuersignals führen, welche ebenfalls zur Herbeiführung der Notbetätigungsstellung genutzt werden kann. Möglich ist im Rahmen der Erfindung aber auch, dass der elektrische Notbetätigungskreis ein elektronischer Notbetätigungskreis ist, der eine elektronische Steuereinheit aufweist. In diesem Fall kann der elektrische Steueranschluss der Kopplungseinrichtung auch über die elektronische Steuereinheit mit der elektrischen Leistungsversorgung und/oder mit dem Notbetätigungsorgan verbunden sein. Der Einsatz der elektronischen Steuereinheit ermöglicht weitere Modifikationen des den Steueranschluss der Kopplungseinrichtung beaufschlagenden Steuersignals und auch die Abhängigkeit desselben von weiteren, der elektronischen Steuereinheit zugeführten Betriebs- und/oder Umgebungsgrößen.

Im Rahmen der Erfindung ist auch möglich, dass der elektrische Notbetätigungskreis nicht ausschließlich für die Ansteuerung einer einzigen Kopplungseinrichtung für eine einzige Fahrzeugtür dient. Vielmehr kann der elektrische Notbetätigungskreis (mit denselben oder unterschiedlichen Steuersignalen) mindestens zwei Kopplungseinrichtungen ansteuern, welche unterschiedlichen Fahrzeugtüren zugeordnet sind. Beispielsweise können zwei Kopplungseinrichtungen von zwei Flügeltüren einer Doppeltür mit demselben Steuersignal beaufschlagt werden, so dass dann gleichzeitig an der Doppeltür an beiden Türflügeln eine Handnotbetätigung ermöglicht werden kann. Möglich ist aber auch, dass mindestens zwei Kopplungseinrichtungen, die von demselben spezifischen Steuersignal beaufschlagt werden, separate und beabstandet voneinander angeordnete Fahrzeugtüren sind, die unterschiedlichen Ausgängen des Fahrzeugs zugordnet sind. Vorzugsweise wird hierbei das Steuersignal über verzweigte oder parallel geschaltete Steuerleitungen an die Steueranschlüsse der Kopplungseinrichtungen übermittelt. Möglich ist auch, dass zwei Ausgänge einer elektronischen Steuereinheit mit den beiden Kopplungseinrichtungen verbunden sind, wobei dann beide Steuerausgänge der elektronischen Steuereinheit mit demselben Steuersignal beaufschlagt werden.

Möglich ist auch, dass der elektrische Steueranschluss der Kopplungseinrichtung (unmittelbar oder über die elektronische Steuereinheit) mit zwei oder mehr manuell betätigbaren elektrischen Notbetätigungsorganen verbunden ist. Sind diese mehreren Notbetätigungsorgane an unterschiedlichen Stellen des Fahrzeugs (innen und/oder außen) angeordnet, kann auf einfache Weise eine Notbetätigung an unterschiedlichen Stellen des Fahrzeugs gewährleistet werden.

Erfindungsgemäß weist der elektrische Notbetätigungskreis sowohl eine Haupt-Energieversorgung als auch eine Puffer-Energieversorgung oder Pufferbatterie (im Folgenden "Puffer-Energieversorgung") auf. Bei der Haupt-Energieversorgung kann es sich um die Haupt-Energieversorgung des Fahrzeugs, insbesondere eine Fahrzeugbatterie, einen Generator des Fahrzeugs u. ä. handeln. Die Puffer-Energieversorgung ist (mit einer geeigneten Ladestrategie und u. U. unter Steuerung des Ladevorgangs durch eine oder die vorgenannte Steuereinheit) permanent oder in ausgewählten Betriebssituationen von der Haupt-Energieversorgung des Fahrzeugs aufladbar. Vorzugsweise hat die Puffer-Energieversorgung eine(n) um mindestens 50 % (vorzugsweise mindestens 60 %, mindestens 70 %, mindestens 80 % oder sogar mindestens 90 %) kleine Kapazität, kleine Nennspannung oder kleineren Nennstrom als die Haupt-Energieversorgung. Im Rahmen der Erfindung ermöglicht die Puffer-Energieversorgung noch eine Erzeugung eines Steuersignals für die Kopplungseinrichtung in dem elektrischen Notbetätigungskreis, mit dem die Kopplungseinrichtung in der Antriebsstellung gehalten werden kann, wenn es zu einem Einbruch der Energieversorgung durch die Haupt-Energieversorgung gekommen ist. Somit kann die Überführung der Kopplungseinrichtung in die Notbetätigungsstellung bei Einbruch der elektrischen Leistungsversorgung durch die Haupt-Energieversorgung zeitlich hinausgeschoben werden, ohne dass die Möglichkeit der Notbetätigung selber nicht mehr gegeben ist. Hierbei kann die Zeitspanne der Verzögerung der Überführung der Kopplungseinrichtung in die Notbetätigungsstellung von den Leistungsdaten und dem Ladezustand der Puffer-Energieversorgung abhängen.

Für eine mögliche Auslegung der Puffer-Energieversorgung ist diese so dimensioniert, dass (bei Einbruch der Energieversorgung durch die Haupt-Energieversorgung) die Puffer-Energieversorgung die Kopplungseinrichtung zumindest für 24 Stunden (vorzugsweise zumindest für 7 Tage, zumindest für 10 Tage, zumindest für 14 Tage oder sogar zumindest für 21 Tage) in der Antriebsstellung halten kann.

Es kann erforderlich sein, dass über ein geeignetes Steuersignal des elektrischen Notbetätigungskreises die Kopplungseinrichtung nicht nur in der Antriebsstellung gehalten werden kann, sondern diese vielmehr auch von der Notbetätigungsstellung in die Antriebsstellung überführt werden kann. In einer Ausgestaltung der Erfindung ist dieses möglich, wenn die Haupt-Energieversorgung vorhanden ist. Hingegen ist die Puffer-Energieversorgung so ausgelegt, dass bei alleiniger elektrischer Leistungsversorgung durch die Puffer-Energieversorgung eine Überführung der Kopplungseinrichtung von der Notbetätigungsstellung in die Antriebsstellung nicht möglich ist (während aber durchaus über die Puffer-Energieversorgung die Kopplungseinrichtung in der Antriebsstellung gehalten werden kann).

Grundsätzlich können die Haupt-Energieversorgung einerseits und die Puffer-Energieversorgung andererseits beliebige (unterschiedliche oder gleiche) Nenn-Spannungsniveaus bereitstellen, wobei vorzugsweise die Haupt-Energieversorgung ein höheres Nenn-Spannungsniveau bereitstellt. Für einen Vorschlag der Erfindung stellt die Haupt-Energieversorgung ein Nenn-Spannungsniveau von 24 V oder 48 V bereit, wobei es sich um ein übliches Nenn-Spannungsniveau einer Fahrzeugbatterie und der Fahrzeugelektronik oder eines Bordnetzes handelt, wobei das Nennspannungsniveau auch geringfügig (bspw. um +/- 1 V oder +/- 2 V) von dem genannten Nenn-Spannungsniveau abweichen kann. Hingegen stellt die Puffer-Energieversorgung ein Nenn-Spannungsniveau zur Verfügung, welches kleiner ist als 15 V (vorzugsweise kleiner ist als 13 V oder kleiner ist als 10 V oder kleiner ist als 5 V). Für eine besondere Ausgestaltung findet eine Puffer-Energieversorgung Einsatz, deren Nenn-Spannungsniveau 12 V beträgt, wobei auch hier geringfügige Abweichungen (beispielsweise um +/- 1 V) von diesem Nenn-Spannungsniveau möglich sind. Batterien mit einer derartigen Nenn-Spannung werden auf dem Markt von vielen Anbietern angeboten und können zu geringen Preisen bezogen werden. Unter Umständen ist im Rahmen der Erfindung die von der Puffer-Energieversorgung bereitgestellte höhere Spannung größer als die benötigte Spannung. In diesem Fall kann eine Spannungswandlung erfolgen, was beispielsweise mittels einer elektronischen Steuereinheit und/oder mit dem Einsatz eines DC-DC-Wandlers erfolgen kann. Beispielsweise kann die Puffer-Energieversorgung einen Nenn-Spannung von 12 V aufweisen mit einer Wandlung der Spannung auf eine Spannung im Bereich von 2 V bis 5 V, vorzugsweise im Bereich von 2.5 bis 4 V, mit welcher dann der Steueranschluss der Kopplungseinrichtung beaufschlagt werden kann.

Im Rahmen der Erfindung kann als Puffer-Energieversorgung eine aufladbare Batterie einer beliebigen Bauform verwendet werden. Um lediglich einige nicht beschränkende Beispiele zu nennen, kann es sich bei der Batterie um einen Lithium-Ionen-Akkumulator, Lithium-Cobaltdioxid-Akkumulator, Lithium-Polymer-Akkumulator, Lithium-Mangan-Akkumulator, Lithium-Eisenphosphat-Akkumulator, Lithium-Eisen-Yttrium-Phosphat-Akkumulator, Lithium-Luft-Akkumulator, Lithium-Titanat-Akkumulator, Lithium-Schwefel-Akkumulator, Lithium-Metall-Polymer-Akkumulator, Natrium-Nickelchlorid-Akkumulator, Natrium-Schwefel-Akkumulator, Natrium-Ionen-Akkumulator, Nickel-Cadmium-Akkumulator, Nickel-Eisen-Akkumulator, Nickel-Wasserstoff-Akkumulator, Nickel-Metallhydrid-Akkumulator, Nickel-Zink-Akkumulator, Bleiakkumulator, modifiziertes PTMA, Rechargeable Alkaline Manganese, Zinn-Schwefel-Lithium-Akkumulator, Silber-Zink-Akkumulator, Vanadium-Redox-Akkumulator, Zink-Brom-Akkumulator, Silizium-Luft-Akkumulator handeln, wobei in diesen Fällen die Batterie eine oder mehrere Zellen aufweisen kann. Möglich ist aber beispielsweise auch, dass der Batterie eine mit Kondensatorplatten gebildete Kapazität oder ein so genannter Ultra- oder Superkondensator (englisch *"Supercapacitor",* kurz Supercap oder SC) ist. Ultra- oder Superkondensator sind elektrochemische Kondensatoren (englisch *electrochemical capacitors*) und als solche eine Weiterentwicklung von Doppelschichtkondensatoren (englisch *electric double-layer capacitor,* EDLC). Im Vergleich zu Akkumulatoren anderer Bauarten gleichen Gewichts weisen Superkondensatoren u. U. nur etwa 10 % von deren Energiedichte auf, allerdings ist ihre Leistungsdichte in einigen Fällen etwa 10- bis 100-fach größer. Superkondensatoren können deshalb in einigen Fällen sehr viel schneller ge- und entladen werden. Superkondensatoren überstehen möglicherweise eine große Zahl von Nutzungszyklen.

Grundsätzlich kann im Rahmen der Erfindung eine Aufrechterhaltung der Notbetätigungsstellung und/oder der Antriebsstellung der Kopplungseinrichtung und eine Veränderung der Kopplungseinrichtung von der Notbetätigungsstellung in die Antriebsstellung (und/oder umgekehrt) auf Grundlage des elektrischen Steuersignals auf beliebige Weise, insbesondere mittels eines beliebig ausgestalteten, mit dem Steuersignal elektrisch beaufschlagten Elektromagneten, erfolgen. Für einen besonderen Vorschlag der Erfindung weist die Kopplungseinrichtung einen Haftmagneten auf. Der Haftmagnet sichert mit einer geringen elektrischen Leistungsaufnahme, aber einer großen Haftkraft und damit einer großen Sicherheit eine Betriebsstellung der Kopplungseinrichtung, insbesondere die Antriebsstellung. Im Rahmen der Erfindung wird unter einem Haftmagneten ein Elektromagnet verstanden, in welchem keine mechanische Bewegung umgesetzt wird. Vielmehr verfügt der elektrische Haftmagnet über eine Spulenwicklung und einen gegenüber der Spulenwicklung nicht bewegbaren Kern. An diesem Kern liegt dann in der Haftstellung ein Haftkörper der Kopplungseinrichtung an (oder ist in einem sehr geringen Abstand von dem Kern angeordnet). Damit schließt der Haftkörper den magnetischen Fluss, welcher durch die Spulenwicklung erzeugt wird. Insbesondere ist der Haftmagnet gemäß Richtlinie VDE 0580 ausgebildet, wobei dieser auch als "Lasthebemagnet" bezeichnet ist, wobei dann aber die Lasthebemagnete zu einem anderen Zweck, nämlich zum Festhalten von Lasten beispielsweise für Transportzwecke und mit u. U. deutlich größeren Abmessungen, genutzt werden.

Um lediglich eine mögliche Querschnitts- und Bauform eines im Rahmen der Erfindung einsetzbaren Haftmagneten zu nennen, kann dieser als Topfmagnet ausgebildet sein, der im Wesentlichen rotationssymmetrisch zu einer Längsachse ausgebildet ist. In diesem Fall ist der Kern des Haftmagneten im Halblängsschnitt in der Form eines liegenden U ausgebildet mit Anordnung der Spulenwicklung zwischen den beiden Seitenschenkeln des U. Hierbei kann der radial innen liegende Seitenschenkel des U von einem durchgehenden zylindrischen Innenkern des Haftmagneten ausgebildet sein. An den freien Endbereichen des U des Haftmagneten liegt der metallische "haftende" Gegenstand, welcher im Folgenden auch als Haftkörper bezeichnet wird, in der Haft- oder Haltestellung an oder der Haftkörper bildet lediglich einen kleinen Restspalt zu dem Haftmagneten aus. Für derart durch den zu haltenden Gegenstand zu einem O geschlossenes U ergibt sich ein geschlossener magnetischer Fluss, welcher das Halten des zu haltenden Gegenstandes auch bei kleiner elektrischer Leistungsaufnahme ermöglicht. Durch den erfindungsgemäßen Einsatz des Haftmagneten kann somit die Notbetätigungs-Ventileinrichtung mit einer kleinen Leistungsaufnahme (die u. U. drastisch reduziert ist gegenüber einem Elektromagneten mit im Inneren angeordnetem beweglichen Anker) gehalten werden.

Im Rahmen der Erfindung eingesetzte Haftmagnete können als Zukaufteile kostengünstig bezogen werden mit vielfältigen Abstufungen der elektrischen Leistungsaufnahme und der Charakteristik der zwischen Haltemagnet und zu haltendem Gegenstand je nach Abstand erzeugten Haltekraft. Des Weiteren kann ein derartiger Haftmagnet zuverlässig die haftende Betriebsstellung auch bei kleiner elektrischer Leistungsversorgung gewährleisten. Eine Auslegung derartige Haftmagnete kann gemäß der Richtlinie VDE 0580 erfolgen.

Für die Ausgestaltung des Antriebsstrangs gibt es im Rahmen der Erfindung vielfältige Möglichkeiten, wobei hier beispielhaft drei Varianten aufgeführt werden.

Gemäß einer **ersten Variante** ist der Antriebsstrang als elektromechanischer Antriebsstrang ausgebildet. Der elektromechanische Antriebsstrang verfügt über ein Antriebsaggregat, welches hier ein elektrischer Motor, ggf. mit einem nachgeschalteten Über- oder Untersetzungsgetriebe, ist. Des Weiteren verfügt der elektromechanische Antriebsstrang über eine mechanische Antriebsverbindung, über welche die Abtriebswelle des elektrischen Motors mit der Fahrzeugtür verbunden ist. Hierbei kann es sich um eine unmittelbare Verbindung handeln oder jegliche getriebliche mechanische Verbindung. Für diese Ausgestaltung des Antriebsstrangs als derartiger elektromechanischer Antriebsstrang schlägt die Erfindung vor, dass die Kopplungseinrichtung eine Kupplung ist, welche in die mechanische Antriebsverbindung integriert ist. In der Antriebsstellung der Kupplung ist die mechanische Antriebsverbindung aktiviert, womit dann über die Antriebskinematik der mechanischen Antriebsverbindung eine Veränderung des Drehwinkels der Abtriebswelle des elektrischen Motors mit einer Veränderung der Stellung der Fahrzeugtür korreliert. Hingegen erfolgt mit der Öffnung der Kupplung die Herbeiführung der Notbetätigungsstellung der Kopplungseinrichtung, womit die mechanische Verbindung zwischen der Abtriebswelle des elektrischen Motors und der Fahrzeugtür getrennt ist. Damit ist die Veränderung der Stellung der Fahrzeugtür über den elektrischen Motor nicht mehr möglich. Andererseits hält der elektrische Motor aber auch nicht mehr die Fahrzeugtür in einer eingenommenen Stellung, so dass die Handnotbetätigung möglich ist.

Für eine **zweite Variante** der Erfindung ist der Antriebsstrang als fluidisch-mechanischer Antriebsstrang ausgebildet. In diesem Fall ist das Antriebsaggregat eine Pumpe, welche von einem elektrischen Motor angetrieben wird. Zwischen die Pumpe und die Fahrzeugtür ist einerseits eine fluidische Antriebsverbindung und andererseits eine mechanische Antriebsverbindung zwischengeschaltet, wobei die Übertragung der Antriebsbewegung von der fluidischen Antriebsverbindung zu der mechanischen Antriebsverbindung über einen fluidischen Aktuator erfolgt. Die fluidische Antriebsverbindung ist hierbei ein fluidischer Antriebskreis, der zwischen die Pumpe und den Aktuator zwischengeschaltet ist. Der Aktuator weist eine erste fluidische Druckkammer und eine zweite fluidische Druckkammer auf. Mittels der Druckbeaufschlagung der ersten fluidischen Druckkammer durch die Pumpe kann eine Öffnungsbewegung der Fahrzeugtür herbeigeführt werden, während mit der Druckbeaufschlagung der zweiten fluidischen Drucckammer durch die Pumpe eine Schließbewegung der Fahrzeugtür herbeigeführt werden kann. Auch in diesem Fall kann die Kopplungseinrichtung als Kupplung ausgebildet sein, welche in die mechanische Antriebsverbindung integriert ist. Um lediglich ein die Erfindung nicht beschränkendes Beispiel zu nennen, kann die mechanische Antriebsverbindung den Aktuator, insbesondere einen doppelt wirkenden fluidischen Stellzylinder, über eine getriebliche Verbindung und/oder eine Drehsäule mit der Fahrzeugtür mechanisch koppeln, wobei dann die Kupplung in den Kraftfluss der mechanischen Antriebsverbindung, also in ein Antriebselement für die Drehsäule, ein Abtriebselement der Drehsäule oder die Drehsäule selbst, integriert sein kann.

Findet für eine Variante der Erfindung eine Kopplungseinrichtung in Form der Kupplung Einsatz, gibt es für die Ausgestaltung der Kupplung vielfältige Möglichkeiten:
Für eine erste Ausgestaltung ist die Kupplung eine Rutschkupplung, bei welcher unterhalb eines Schwellwertes eines übertragenen Kupplungsmoments die Kupplungshälften aneinander haften, so dass keine Relativbewegung der Kupplungshälften der Rutschkupplung möglich ist. Überschreitet hingegen das Kupplungsmoment den genannten Schwellwert, kommt es zu einem Rutschen, womit eine Relativbewegung der Kupplungshälften zueinander ermöglicht ist. Erfindungsgemäß wird bei der Rutschkupplung über das Steuersignal des elektrischen Notbetätigungskreises die Anpresskraft der Kupplungshälften der Rutschkupplung verändert, womit auch der vorgenannte Schwellwert des Kupplungsmoments, für welchen ein Rutschen der Kupplungshälften auftritt, von dem Steuersignal abgängig ist. Dieses kann im Rahmen der Erfindung wie folgt genutzt werden: Für den normalen Fahrbetrieb kann ein Steuersignal derart erzeugt werden, dass eine große Anpresskraft der Kupplungshälften, insbesondere mittels des zuvor genannten Haftmagneten, herbeigeführt wird. Somit ist der Schwellwert des Kupplungsmoments für das Einsetzen des Rutschens so hoch, dass kein Rutschen auftritt und die Rutschkupplung die Antriebsstellung einnimmt. Hierbei wird der Schwellwert vorzugsweise so hoch gewählt, dass dieser nicht überschritten werden kann durch manuell von einer Person unmittelbar auf die Fahrzeugtür aufgebrachte Handnotbetätigungskräfte. Ist hingegen eine Notbetätigung erfolgt, wird die Anpresskraft der Kupplungshälften reduziert und damit der Schwellwert abgesenkt, so dass die von der Person aufgebrachten Handnotbetätigungskräfte dazu führen, dass es zu einem Rutschen der Rutschkupplung kommt, so dass dann die Fahrzeugtür unabhängig von dem Betriebszustand des Antriebsaggregats mit einer Handnotbetätigung bewegt werden kann. Hierbei umfasst die Erfindung auch Ausgestaltungen einer Rutschkupplung, bei welcher nicht Kupplungshälften mit ebenen Kupplungsflächen aneinandergepresst werden, sondern zwischen den Kontaktflächen der Kupplungshälften auch ein Formschluss erzeugt wird. In diesem Fall erfolgt der Formschluss aber über Schrägen, so dass die Applikation eines Kupplungsmoments auf die Kupplungshälften an den Schrägen eine Kraft auf die Kupplungshälften erzeugt, welche auf ein Ausrücken einer Kupplungshälfte ausgerichtet ist. Mit Überschreiten des einerseits über die Reibung zwischen den Kupplungshälften und andererseits über die Schrägen vorgegebenen Schwellwerts der Rutschkupplung können dann die Kupplungshälften entlang der Schrägen gleiten und sich damit voneinander entfernen, womit dann ein Rutschen der Rutschkupplung ausgelöst werden kann.

Für eine andere von der Erfindung umfasste Möglichkeit der Ausgestaltung der Kupplung findet eine formschlüssige Kupplung Einsatz. In diesem Fall kann über das Steuersignal des elektrischen Notbetätigungskreises der Formschluss der Kupplungshälften beseitigt werden. Hierbei kann es sich um einen Formschluss der Kupplungshälften selber handeln, womit dann mittels des Steuersignals des elektrischen Notbetätigungskreises die Kupplungshälften selber auseinanderbewegt werden müssen, um den Formschluss zu beseitigen. Ebenfalls möglich ist aber auch, dass zwischen den Kupplungshälften ein Formschluss über ein separates, mittels eines Aktuators zwischen einer verriegelten Stellung der beiden Kupplungshälften und einer entriegelten Stellung der beiden Kupplungshälften bewegbares Verriegelungselement erfolgt.

Für eine **dritte Variante** der Erfindung ist der Antriebsstrang als fluidisch-mechanischer Antriebsstrang ausgebildet, wie dies bereits zuvor für die zweite Variante erläutert worden ist. Allerdings ist hier die Kopplungseinrichtung nicht mit einer Kupplung gebildet, sondern vielmehr mit einer Notbetätigungs-Ventileinrichtung gebildet. Die Notbetätigungs-Ventileinrichtung weist eine Schließstellung auf, welche die Antriebsstellung der Kopplungseinrichtung bildet und welche vorzugsweise im normalen Betrieb des Fahrzeugs eingenommen wird. In der Schließstellung verschließt die Notbetätigungs-Ventileinrichtung eine Kurzschlussverbindung zwischen der ersten Druckkammer und der zweiten Druckkammer des Aktuators. Somit kann in der Schließstellung nicht über die Kurzschlussverbindung bei manueller Applikation von Handnotbetätigungskräften auf die Fahrzeugtür ein Umwälzen von Fluid aus einer Druckkammer in die andere Druckkammer erfolgen. Somit ist eine Handnotbetätigung der Fahrzeugtür nicht möglich, wenn sich die Notbetätigungs-Ventileinrichtung in der Schließstellung befindet. Die Notbetätigungs-Ventileinrichtung weist aber auch eine Öffnungsstellung auf, welche die Notbetätigungsstellung der Kopplungseinrichtung bildet und die durch die Notbetätigung des Notbetätigungsorgans und/oder einen Einbruch der elektrischen Leistungsversorgung herbeiführbar ist. In der Öffnungsstellung ist die Kurzschlussverbindung zwischen den beiden Drucckammern des Aktuators durch die Notbetätigungs-Ventileinrichtung geöffnet. Dies hat zur Folge, dass bei einer Handnotbetätigung mit der Applikation von Handnotbetätigungskräften auf die Fahrzeugtür ein Umwälzen von Fluid von einer Druckkammer in die andere Druckkammer möglich ist, so dass eine manuelle Öffnung der Fahrzeugtür durch eine Handnotbetätigung möglich ist.

Im Rahmen der Erfindung kann es sich bei der Notbetätigungs-Ventileinrichtung um ein Magnetventil handeln oder eine Baugruppe mit einem Magnetventil, welches ein pneumatisch gesteuertes weiteres Ventil vorsteuert. Hierbei kann die Notbetätigungs-Ventileinrichtung verschiedene über elektrische und/oder pneumatische Leitungen miteinander verbundene Teilbaueinheiten oder Module aufweisen oder eine Notbetätigungs-Ventileinheit in Ausbildung als singuläre Baueinheit sein.

In weiterer Ausgestaltung der erfindungsgemäßen Fahrzeugtür-Antriebsbaugruppe dieser dritten Variante weist die Notbetätigungs-Ventileinrichtung eine Öffnungsfeder auf. Die Öffnungsfeder beaufschlagt die Notbetätigungs-Ventileinrichtung in die Öffnungsstellung. Dies hat zur Folge, dass die Notbetätigungs-Ventileinrichtung nicht grundsätzlich zwei stabile Stellungen (nämlich eine stabile Öffnungsstellung und eine stabile Schließstellung, wie dies gemäß EP 2 698 490 A2 der Fall ist) aufweist, sondern nur eine stabile Stellung, bei der es sich um die Öffnungsstellung handelt. Die stabile Öffnungsstellung wird infolge der Öffnungsfeder dann eingenommen, wenn nicht andere, im Folgenden erläuterte Kräfte in der Notbetätigungs-Ventileinrichtung wirken. Abweichend zu EP 2 698 490 A2 erfolgt für diese dritte Variante auch nicht eine rein mechanische Notbetätigung. Vielmehr erfolgt die Notbetätigung über den elektrischen Notbetätigungskreis, in welchem ein elektrisches Notbetätigungssignal als Steuersignal erzeugt und übertragen und ggf. modifiziert werden kann. Für diese Weiterbildung der Fahrzeugtür-Antriebsbaugruppe in der dritten Variante beaufschlagt der elektrische Notbetätigungskreis für den Fall, dass gleichzeitig zwei Kriterien erfüllt sind, nämlich
- eine elektrische Leistungsversorgung vorhanden ist und
- keine Notbetätigung erfolgt,
   einen elektrischen Steueranschluss der Notbetätigungs-Ventileinrichtung mit einem elektrischen Steuersignal. Das Steuersignal ist dabei derart beschaffen und wird in der Notbetätigungs-Ventileinrichtung so umgesetzt, dass die Notbetätigungs-Ventileinrichtung infolge des elektrischen Steuersignals entgegen der Wirkung der Öffnungsfeder in der Schließstellung gehalten wird. In der Schließstellung ist dann aber eine Kurzschlussverbindung zwischen den beiden Druckkammern des mindestens einen Aktuators durch die Notbetätigungs-Ventileinrichtung abgesperrt, so dass keine Handnotbetätigung möglich ist. Kommt es hingegen
- entweder zum Einbruch einer elektrischen Leistungsversorgung
- oder zu einer Notbetätigung,
wird der elektrische Steueranschluss der Notbetätigungs-Ventileinrichtung mit einem elektrischen Steuersignal beaufschlagt, welches so beschaffen ist und in der Notbetätigungs-Ventileinrichtung so umgesetzt wird, dass dieses zur Folge hat, dass die Notbetätigungs-Ventileinrichtung infolge der Wirkung der Öffnungsfeder in die Öffnungsstellung überführt wird, wobei dies allein auf Grundlage der Wirkung der Öffnungsfeder erfolgen kann oder neben weiteren Maßnahmen auch unter Wirkung der Öffnungsfeder. In der Öffnungsstellung ist dann aber eine Kurzschlussverbindung zwischen den beiden Druckkammern des mindestens einen Aktuators durch die Notbetätigungs-Ventileinrichtung geöffnet, so dass eine Handnotbetätigung möglich ist.

Erfindungsgemäß kann die Fahrzeugtür-Antriebsbaugruppe gemäß der dritten Variante insbesondere gezielt drei unterschiedlichen Betriebssituationen Rechnung tragen:
a) Ohne einen Einbruch einer elektrischen Leistungsversorgung und ohne Notbetätigung gewährleistet die erfindungsgemäße Fahrzeugtür-Antriebsbaugruppe, dass die Betriebsstellung der Fahrzeugtür durch den fluidischen Antriebskreis vorgegeben ist. Je nach fluidischer Beaufschlagung des Aktuators durch eine Pumpe oder anderweitige fluidische Elemente oder Ventile des fluidischen Antriebskreises kann dann über den fluidischen Antriebskreis die Betriebsstellung der Fahrzeugtür verändert werden oder eine einmal eingenommene Betriebsstellung aufrechterhalten werden, wobei auch ergänzend eine Verriegelung der Fahrzeugtür in einer Öffnungs- oder Schließstellung erfolgen kann, wie dies beispielsweise aus der Druckschrift DE 10 2008 034 994 B3 bekannt ist. Absichtlich oder unabsichtlich von Personen auf die Fahrzeugtür aufgebrachte Kräfte führen nicht zu einer ungewollten Öffnungs- oder Schließbewegung der Fahrzeugtür.
b) Für den Fall, dass eine Notbetätigung erfolgt, wird das so manuell vorgegebene Notbetätigungssignal über den elektrischen Notbetätigungskreis verarbeitet. Der elektrische Notbetätigungskreis beaufschlagt die Notbetätigungs-Ventileinrichtung mit einem elektrischen Steuersignal derart, dass dieses die Öffnungsstellung einnimmt, womit dann die gewünschte Handnotbetätigung der Fahrzeugtür möglich ist.
c) Die Erfindung trägt auch der unerwünschten Betriebssituation Rechnung, dass ein Einbruch einer elektrischen Leistungsversorgung erfolgen kann. In einem derartigen Fall ist tunlichst zu vermeiden, dass eine Handnotbetätigung nicht mehr erfolgen kann. Diesem Erfordernis trägt die Erfindung Rechnung dadurch, dass der elektrische Notbetätigungskreis ein Steuersignal erzeugt, welches bei Einbruch einer elektrischen Leistungsversorgung die Wirkung hat, dass die Notbetätigungs-Ventileinrichtung (auch ohne vorliegende Notbetätigung) infolge der Wirkung der Öffnungsfeder die Öffnungsstellung einnimmt. Hierbei kann die Öffnungsstellung unmittelbar mit dem Einbruch der elektrischen Leistungsversorgung herbeigeführt werden oder, insbesondere im Fall des Einsatzes der eingangs genannten Puffer-Energieversorgung, erst mit einer Verzögerung.

In der Notbetätigungs-Ventileinrichtung kann eine Betriebsstellung über einen Haftmagneten gesichert sein. Grundsätzlich möglich ist hierbei, dass der Haftmagnet ausschließlich zum Halten der Notbetätigungs-Ventileinrichtung in der Schließstellung genutzt wird, während für eine Bewegung der Notbetätigungs-Ventileinrichtung aus der Öffnungsstellung in die Schließstellung eine zusätzliche Einrichtung wie beispielsweise eine zusätzliche Elektromagneteinrichtung eingesetzt werden kann. Vorzugsweise dient aber der Haftmagnet bei kleiner elektrischer Leistungsaufnahme dem Halten der Notbetätigungs-Ventileinrichtung in der Schließstellung und gleichzeitig bei erhöhter elektrischer Leistungsaufnahme und größerem Steuersignal dem Überführen der Notbetätigungs-Ventileinrichtung von der Öffnungsstellung in die Schließstellung.

Für die Notbetätigungs-Ventileinrichtung gibt es vielfältige Ausgestaltungsmöglichkeiten, wobei die Notbetätigungs-Ventileinrichtung modular oder auch mit verteilten Baueinheiten ausgebildet sein kann. Für einen Vorschlag der Erfindung ist allerdings die Notbetätigungs-Ventileinrichtung als singuläre Baueinheit (und somit als Notbetätigungs-Ventileinheit) ausgebildet. Diese singuläre Baueinheit verfügt dann über einen ersten Druckkammeranschluss und einen zweiten Drucckammeranschluss, über welche die Notbetätigungs-Ventileinrichtung mit den Druckkammern des mindestens einen Aktuators verbunden werden kann. Des Weiteren ist ein elektrischer Steueranschluss vorhanden, über welchen die Notbetätigungs-Ventileinrichtung mit dem elektrischen Steuersignal beaufschlagt werden kann. Zwischen dem ersten Druckkammeranschluss und dem zweiten Druckkammeranschluss ist ein Ventil angeordnet, welches in Bauweise als Schieberventil oder als Sitzventil ausgebildet sein kann. Dieses Ventil verfügt über einen Ventilkörper, bei welchem es sich bei Bauweise als Schieberventil um den Ventilschieber handelt und bei Bauweise als Sitzventil um den Ventilteller handeln kann. Der Ventilkörper weist eine Öffnungsstellung und eine Schließstellung auf. Der über den elektrischen Steueranschluss angesteuerte Haftmagnet dient der Sicherung der Schließstellung des Ventilkörpers.

Grundsätzlich möglich ist, dass der Haltekörper, welcher in der Schließ- oder Haltestellung an dem Haftmagneten anliegt oder unter geringem Abstand zu diesem angeordnet ist, mechanisch starr mit dem Ventilkörper gekoppelt ist. Dies hat aber zur Folge, dass sehr hohe Anforderungen an die Fertigungsgenauigkeiten zu stellen sind, da die Haft- oder Haltestellung des Haltekörpers exakt mit der Schließstellung des Ventilkörpers relativ zu dem Ventilsitz oder den Auslasskanälen des Schieberventils übereinstimmen muss. Für einen anderen Vorschlag der Erfindung ist der Ventilkörper über eine Ausgleichsfeder mit einem Haltekörper eines Haftmagneten mechanisch verbunden. Die Ausgleichsfeder ermöglicht mit einer Annäherung an die Haftstellung des Haltekörpers im Endbereich eines Schließhubs des Ventilkörpers, wenn bereits der Ventilkörper an dem Ventilsitz anliegt, eine Relativbewegung des Ventilkörpers gegenüber dem Haltekörper, welche mit einer Erhöhung der Anpresskraft des Ventilkörpers an den Ventilsitz einhergeht. Anders gesagt kommt der Ventilkörper bereits zur Anlage an den Ventilsitz, bevor die Haftstellung des Haltekörpers erreicht ist. Nähert sich dann der Haltekörper weiter dem Haftmagneten an, führt dies zu einer Ausgleichsbewegung durch die Ausgleichsfeder, wobei dann die Ausgleichsfeder gleichzeitig eine Anpresskraft für den Ventilkörper an den Ventilsitz vorgibt. Einerseits kann hierdurch innerhalb verhältnismäßig kleiner Grenzen die Anpresskraft des Ventilkörpers an den Ventilsitz vorgegeben werden, was für die Funktion des derart gebildeten Ventils vorteilhaft ist. Andererseits können hierdurch die Anforderungen an die Fertigungsgenauigkeiten reduziert werden.

Für eine im Rahmen der Erfindung mögliche konstruktive Ausgestaltung ist der Haltekörper über die Ausgleichsfeder und einen Ventilstößel mit dem Ventilkörper verbunden. In diesem Fall kann sich der Ventilstößel durch den Haftmagneten (insbesondere durch eine Innenbohrung des Haftmagneten) hindurch erstrecken.

In weiterer konstruktiver Ausgestaltung können die Ausgleichsfeder und die Öffnungsfeder, welche die Notbetätigungs-Ventileinrichtung in die Öffnungsstellung beaufschlagt, auf unterschiedlichen Seiten von dem Haftmagneten angeordnet sein, womit die Möglichkeiten für die konstruktiven Bauraumgestaltungen erweitert werden.

Der Ventilkörper kann eine auf einen zugeordneten Ventilsitz oder Auslasskanäle eines Schieberventils abgestimmte Geometrie aufweisen. Für einen Vorschlag der Erfindung weist der Ventilkörper einen nadel- oder stiftartigen Endbereich auf, welcher in der Schließstellung mit einem Ventilsitz in Wechselwirkung tritt. Eine derartige Gestaltung des Ventilkörpers hat sich als vorteilhaft hinsichtlich der Dauerfestigkeit sowie hinsichtlich der Gestaltung der Strömungs- und Drosselquerschnitte bei teilweiser oder vollständiger Öffnung des Ventils herausgestellt.

Für einen besonderen Vorschlag der Erfindung ist in der Fahrzeugtür-Antriebsbaugruppe eine Steuereinheit vorhanden, bei welcher es sich auch um die zuvor genannte elektronische Steuereinheit handeln kann. Die Steuereinheit kann hierbei mit Steuerlogik ausgestattet sein, die eine Induktivität des Haftmagneten auswertet, die von der Stellung des Haltekörpers relativ zu dem Haftmagneten abhängig ist. Diese Auswertung der Induktivität wird dann genutzt, um zu detektieren, ob sich die Kopplungseinrichtung in der Antriebsstellung oder der Notbetätigungsstellung befindet (oder sich Notbetätigungs-Ventileinrichtung in der Öffnungsstellung oder der Schließstellung befindet). Somit liefert diese Auswertung u. U. ein binäres Signal "Kopplungseinrichtung in der Antriebsstellung" oder "Kopplungseinrichtung in der Notbetätigungsstellung" (bzw. "Ventilkörper in Öffnungsstellung" oder "Ventilkörper in Schließstellung") oder auch abgestufte Signale zwischen diesen Stellungen. Alternativ ist auch möglich, dass die Auswertung ein Hubsignal der Kopplungseinrichtung (oder der Notbetätigungs-Ventileinrichtung) ermittelt. Ermöglicht werden kann die Auswertung der Induktivität beispielsweise durch Beaufschlagung des Haltemagneten mit einem Testsignal, bei welchem es sich beispielsweise um ein hochfrequentes Signal handelt, welches dann je nach Induktivität des Haftmagneten verändert wird. Das Ausmaß der Veränderung kann somit als Maß für die Induktivität gemäß einer in einer Speichereinheit abgespeicherten Kennlinie oder gemäß eines modellierten physikalischen Zusammenhangs ausgewertet werden.

Im Rahmen der Erfindung wird unter einem "Einbruch einer elektrischen Leistungsversorgung" verstanden, dass eine (insbesondere von einer Batterie oder Hauptbatterie oder einem Generator des Fahrzeugs) zur Verfügung gestellte elektrische Leistung, Versorgungsspannung oder ein Strom vorgegeben Anforderungen oder Sollwerte nicht mehr erfüllt. Beispielsweise kann der Einbruch einer elektrischen Leistungsversorgung dadurch erkannt werden, dass die zur Verfügung gestellte elektrische Leistung, die zur Verfügung gestellte Versorgungsspannung oder der zur Verfügung gestellte Strom temporär oder auch für eine vorbestimmte Zeitspanne unterhalb einem vorgegebenen Schwellwert liegt. Ursache eines derartigen Einbruchs einer elektrischen Leistungsversorgung kann beispielsweise ein Defekt der Batterie oder des Generators, ein Leitungsbruch, ein Kurzschluss oder auch ein unerwünscht hoher Leistungsverbrauch eines ebenfalls von der elektrischen Leistungsversorgung versorgten Verbrauchers sein, um nur einige nicht beschränkende Beispiele zu nennen.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Öffnungsfeder die Rede ist, ist dies so zu verstehen, dass genau eine Öffnungsfeder, zwei Öffnungsfedern oder mehr Öffnungsfedern vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt stark schematisiert eine Fahrzeugtür-Antriebsbaugruppe.
- **Fig. 2**: zeigt schematisch eine zuvor als "dritte Variante" beschriebene Fahrzeugtür-Antriebsbaugruppe mit einem einen Aktuator sowie eine Notbetätigungs-Ventileinrichtung aufweisenden fluidischen Antriebskreis und einem elektrischen Notbetätigungskreis.
- **Fig. 3**: zeigt eine konstruktive Ausgestaltung der Notbetätigungs-Ventileinrichtung gemäß Fig. 2 in einer Öffnungsstellung.
- **Fig. 4**: zeigt die Notbetätigungs-Ventileinrichtung gemäß Fig. 3 in einer Schließstellung.
- **Fig. 5**: zeigt schematisch eine zuvor als "zweite Variante" beschriebene Fahrzeugtür-Antriebsbaugruppe mit einem einen Aktuator aufweisenden fluidischen Antriebskreis, einem elektrischen Notbetätigungskreis und einer mechanischen Antriebsverbindung, wobei in der mechanischen Antriebsverbindung der Kraftfluss über eine von dem elektrischen Notbetätigungskreis angesteuerte Kupplung verläuft.
- **Fig. 6**: zeigt eine in der Fahrzeugtür-Antriebsbaugruppe gemäß Fig. 5 eingesetzte Kupplung in einer Antriebsstellung in einer Seitenansicht.
- **Fig. 7**: zeigt die Kupplung gemäß Fig. 6 in der Antriebsstellung in einem Längsschnitt VII-VII.
- **Fig. 8**: zeigt die Kupplung gemäß Fig. 6 und 7 in einer Notbetätigungsstellung in einer Seitenansicht.
- **Fig. 9**: zeigt die Kupplung gemäß Fig. 8 in der Notbetätigungsstellung in einem Längsschnitt IX-IX.
- **Fig. 10**: zeigt schematisch eine zuvor als "erste Variante" beschrieben Fahrzeugtür-Antriebsbaugruppe mit einem elektromechanischen Antriebsstrang mit einer in eine mechanische Antriebsverbindung integrierten Kupplung, die von einem elektrischen Notbetätigungskreis angesteuert ist.

### FIGURENBESCHREIBUNG

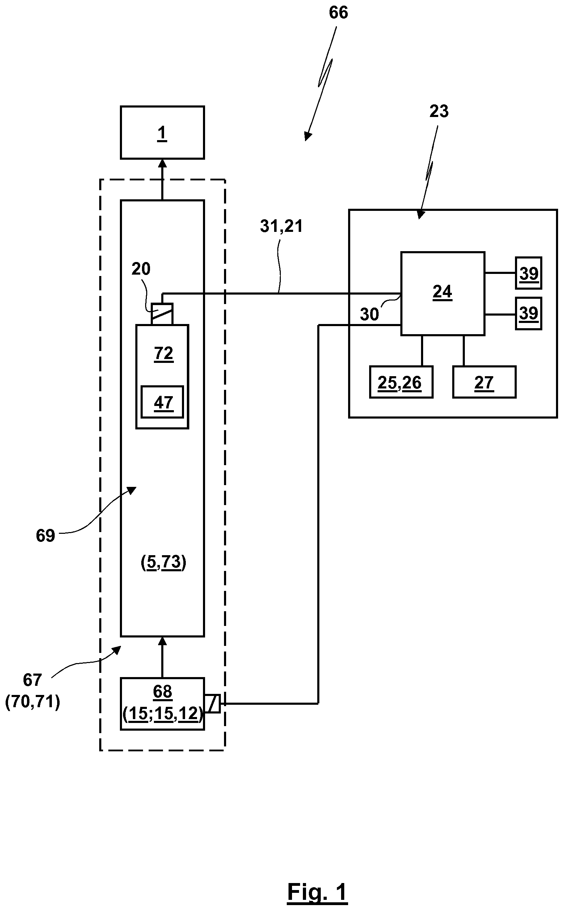

**Fig. 1** zeigt stark schematisiert eine Fahrzeugtür-Antriebsbaugruppe 66. In der Fahrzeugtür-Antriebsbaugruppe 66 erfolgt ein Halten einer Stellung einer Fahrzeugtür 1 und/oder eine Herbeiführung einer Öffnungs- und/oder Schließbewegung der Fahrzeugtür 1 über einen Antriebsstrang 67. Der Antriebsstrang 67 verfügt über ein Antriebsaggregat 68. Des Weiteren weist der Antriebsstrang 67 eine Antriebsverbindung 69 auf, die zwischen das Antriebsaggregat 68 und die Fahrzeugtür 1 zwischengeschaltet ist. Hierbei kann grundsätzlich die Antriebsverbindung 69 beliebig sein und eine beliebige lineare oder nichtlineare Übertragungscharakteristik mit einer Übersetzung oder einer Untersetzung zwischen dem Antriebsaggregat 68 und der Fahrzeugtür 1 aufweisen.

Möglich ist beispielsweise, dass die Antriebsverbindung 69 eine mechanische Antriebsverbindung 73 oder mechanische Antriebskette mit beliebigen mechanischen Übertragungsgliedern und -getrieben ist. Eine derartige mechanische Antriebsverbindung 73 wird in einem Endbereich von einer Bewegung des Antriebsaggregats 68 beaufschlagt. Beispielsweise kann das Antriebsaggregat 68 ein elektrischer Motor 15 sein, dessen Ausgangswelle mit der mechanischen Antriebsverbindung 73 gekoppelt ist. Die mechanische Antriebsverbindung 73 überträgt dann die Bewegung (unter geeigneter Umwandlung, Übersetzung oder Untersetzung) an die Fahrzeugtür. In diesem Fall ist somit der Antriebsstrang 67 als elektromechanischer Antriebsstrang 70 ausgebildet.

Möglich ist aber auch, dass das Antriebsaggregat 68 eine Kombination einer Pumpe 12 mit einem elektrischen Motor 15 ist. In diesem Fall ist die Antriebsverbindung 69 als fluidisch-mechanische Antriebskette ausgebildet, wobei der fluidische Teil über die Pumpe 12 des Antriebsaggregats 68 beaufschlagt wird, eine Umwandlung der fluidischen Beaufschlagung durch einen fluidischen Aktuator 6 erfolgt und der fluidische Aktuator 6 dann eine mechanische Antriebsverbindung 73 und über diese die Fahrzeugtür 1 beaufschlagt. Hierbei kann über den fluidischen Antriebskreis 5 und/oder die mechanische Antriebsverbindung 73 ebenfalls eine geeignete Umwandlung, Über- oder Untersetzung der über das Antriebsaggregat 68 vorgegebenen Beaufschlagung erfolgen. In diesem Fall ist somit der Antriebsstrang 67 als fluidisch-mechanischer Antriebsstrang 71 ausgebildet.

Der Antriebsstrang 67 verfügt des Weiteren über eine Kopplungseinrichtung 72. Bei der Kopplungseinrichtung kann es sich beispielsweise um eine Kupplung 74 oder eine Notbetätigungs-Ventileinrichtung 17 handeln. Diese Kopplungseinrichtung 72 weist eine Antriebsstellung und eine Notbetätigungsstellung auf. In der Antriebsstellung ermöglicht die Kopplungseinrichtung 72 eine Erzeugung einer Öffnungs- und Schließbewegung der Fahrzeugtür 1 und/oder ein Halten der Fahrzeugtür 1 über das Antriebsaggregat 68. Hingegen schwächt oder unterbricht die Kopplungseinrichtung 72 in der Notbetätigungsstellung die Antriebsverbindung 69, womit vorzugsweise die Fahrzeugtür 1 nicht mehr mit dem Antriebsaggregat 68 gekoppelt ist oder diese Kopplung gemindert ist. Somit kann in der Notbetätigungsstellung eine Handnotbetätigung der Fahrzeugtür 1 (unabhängig von dem Betriebszustand des Antriebsaggregats 68) erfolgen. Die Steuerung (wovon im Rahmen der vorliegenden Erfindung auch eine Regelung umfasst ist) der Betriebsstellung der Kopplungseinrichtung 72 erfolgt über einen elektrischen Notbetätigungskreis 23, über den ein Steueranschluss 20 der Kopplungseinrichtung 72 mit einem Steuersignal beaufschlagt wird. Nach Maßgabe des Steuersignals an dem Steueranschluss 20, also unter Vorgabe durch den elektrischen Notbetätigungskreis 23, kann die Herbeiführung und ein Halten der Antriebsstellung und der Notbetätigungsstellung der Kopplungseinrichtung 72 erfolgen. Hierzu kann über den Steueranschluss eine Bestromung eines elektromagnetischen Aktuators in der Kopplungseinrichtung 72 erfolgen. Vorzugsweise findet in der Kopplungseinrichtung 72 ein Haltemagnet 47 Einsatz.

Der elektrische Notbetätigungskreis 23 verfügt über manuelle Notbetätigungsorgane 39. Bei diesen manuellen Notbetätigungsorganen 39 handelt es sich vorzugsweise um im Inneren des Fahrzeugs und/oder an der Außenseite des Fahrzeugs angeordnete Notbetätigungsschalter, welche von einer Person durch Drücken betätigt werden können, wenn eine Notbetätigung erfolgen soll, um hierdurch eine Handnotbetätigung zu ermöglichen. Das durch die Betätigung der Notbetätigungsorgane 39 erzeugte Signal wird einer elektronischen Steuereinheit 24 zugeführt.

Die elektronische Steuereinheit 24 wird einerseits über eine Haupt-Energieversorgung 25, vorzugsweise eine Fahrzeugbatterie 26 oder ein Generator des Fahrzeugs, mit Leistung versorgt. Aus der Haupt-Energieversorgung 25 wird, vorzugsweise unter Steuerung des Ladevorgangs durch die elektronische Steuereinheit 24, eine Puffer-Energieversorgung oder Pufferbatterie 27 geladen, welche dafür bestimmt ist, bei einem Einbruch der elektrischen Leistungsversorgung durch die Haupt-Energieversorgung 25 einen Notbetrieb zu ermöglichen. Auf Grundlage einer Notbetätigung der Notbetätigungsorgane 39 erzeugt dann (unter Verwendung der von der Haupt-Energieversorgung 25 bereitgestellten Energie sowie in einem Notbetrieb unter Verwendung der von der Puffer-Energieversorgung 27 bereitgestellten Energie) die Steuereinheit 24 ein Steuersignal, welches über einen Steuerausgang 30 der elektronischen Steuereinheit 24 und eine Steuerleitung 31 dem Steueranschluss 20 zugeführt wird. Möglich ist, dass (wie in Fig. 1 dargestellt) die elektronische Steuereinheit 24 auch eine Steuerung des Betriebs des Antriebsaggregats 68 übernimmt.

Möglich ist, dass die Steuerlogik einerseits die Zeitpunkte der Beladung der Puffer-Energieversorgung 27 steuert. So kann beispielsweise über die Steuerlogik ein (Nach)Laden der Puffer-Energieversorgung 27 erfolgen, wenn von der Steuereinheit 24, ggf. auf Grundlage eines entsprechenden Sensorsignals, erkannt wird, dass ein Schwellwert eines minimalen Ladeniveaus der Puffer-Energieversorgung 27 unterschritten wird. Alternativ oder zusätzlich kann die Steuerlogik der Steuereinheit 24 dafür sorgen, dass eine Beladung der Puffer-Energieversorgung 27 aus der Haupt-Energieversorgung 25 nur dann erfolgt, wenn die Haupt-Energieversorgung 25 hinreichend Energie zur Verfügung stellt und/oder nicht Betriebszustände des Fahrzeugs oder anderer an die Haupt-Energieversorgung 25 angeschlossener Verbraucher vorliegen, welche einen Ladevorgang der Puffer-Energieversorgung 27 unmöglich machen oder für welche ein gleichzeitiger Ladevorgang für die Puffer-Energieversorgung 27 nachteilig ist oder sein kann. Des Weiteren möglich ist, dass über die Steuereinheit 24 die Ladevorgänge der Puffer-Energieversorgung 27 dahingehend überprüft werden, ob die Puffer-Energieversorgung noch ein Ladeverhalten zeigt, welches deren (im Folgenden näher erläuterte) Funktion gewährleistet. So kann beispielsweise mittels der Steuereinheit 24 überprüft werden, wie viele Ladevorgänge die Puffer-Energieversorgung 27 durchlaufen hat, und bei Überschreiten eines Schwellwertes für die Zahl der Ladevorgänge kann die Steuereinheit 24 verursachen, dass an einer Anzeige für den Fahrer des Fahrzeugs ein Hinweis gegeben wird, dass der Austausch der Puffer-Energieversorgung 27 erfolgen sollte. Möglich ist auch, dass ein Ladestrom der Puffer-Energieversorgung 27 (u. U. in Abhängigkeit von der seitens der Haupt-Energieversorgung 25 bereitgestellten Energie) von der Steuereinheit 24 dahingehend ausgewertet wird, ob sich der Ladevorgang innerhalb vorgegebener Toleranzen bewegt. Um lediglich ein nicht beschränkendes Beispiel zu nennen, kann der Verlauf des Ladestroms mit vorgegebenen Verläufen des Ladestroms, u. U. auch abhängig von der von der Haupt-Energieversorgung 25 bereitgestellten Energie, verglichen werden und auf dieser Grundlage eine Bewertung des Ladeverhaltens erfolgen.

Vorzugsweise handelt es sich bei der Puffer-Energieversorgung 27 um eine Batterie mit einer Kapazität im Bereich von 10 bis 100 Ah, vorzugsweise 20 bis 60 Ah oder 30 bis 50 Ah, wobei diese eine Nennspannung im Bereich von 10 V bis 14 V bereitstellen kann.

Die Fahrzeugtür-Antriebsbaugruppe 66 gemäß Fig. 1 ermöglicht die folgenden unterschiedlichen Betriebsweisen:
a) Für einen normalen Betrieb steuert die elektronische Steuereinheit 24 auf Grundlage einer manuellen Vorgabe einer Person, beispielsweise über einen Vorgabeknopf für einen Passagier oder einen Vorgabeknopf für den Fahrer, das Antriebsaggregat 68 zur Erzeugung der Öffnungs- oder Schließbewegung an. Gleichzeitig wird über die elektronische Steuereinheit 24 die Kopplungseinrichtung 72 so angesteuert, dass sich die Kopplungseinrichtung 72 in der Antriebsstellung befindet. Somit wird von dem Antriebsaggregat 68 die Öffnungs- und Schließbewegung der Fahrzeugtür 1 erzeugt.
b) Liegt kein Wunsch nach einer Öffnungs- oder Schließbewegung vor, erfolgt in einem normalen Fahrbetrieb ein Halten der Position der Fahrzeugtür 1. Dies kann über das Antriebsaggregat 68, die Antriebsverbindung 69 oder separate Maßnahmen wie eine Bremse oder auch eine Verrastung oder eine Verriegelung insbesondere in einer Endstellung der Fahrzeugtür 1 erfolgen.
c) Erfolgt eine Notbetätigung durch Betätigung der Notbetätigungsorgane 39, steuert die elektronische Steuereinheit 24 den Steueranschluss 20 der Kopplungseinrichtung 72 so an, dass die Kopplungseinrichtung 72 die Notbetätigungsstellung einnimmt, womit die Verbindung zwischen den Fahrzeugtür 1 und dem Antriebsaggregat 68 unterbrochen ist. Dies hat zur Folge, dass eine Handnotbetätigung der Fahrzeugtür 1 erfolgen kann.
d) Schließlich führt der Einbruch der elektrischen Leistungsversorgung durch die Haupt-Energieversorgung 25 dazu, dass eine Leistungsversorgung durch die Puffer-Energieversorgung 27 erfolgt. Diese gewährleistet vorzugsweise zumindest für einen begrenzten Zeitraum, dass ohne Notbetätigung der Notbetätigungsorgane 39 weiterhin ein Steuersignal für den Steueranschluss 20 erzeugt wird, welches zur Folge hat, dass die Kopplungseinrichtung 72 für diesen begrenzten Zeitraum in der Antriebsstellung bleibt. Gleichzeitig kann aber gewährleistet werden, dass bei einer Notbetätigung der Notbetätigungsorgane 39 bei Energieversorgung durch die Puffer-Energieversorgung 27 ein Steuersignal an dem Steueranschluss 20 erzeugt wird, welches zu der Umschaltung der Kopplungseinrichtung 72 in die Notbetätigungsstellung führt, womit eine Handnotbetätigung möglich ist.
   Nach der begrenzten Zeitspanne, vorzugsweise mit hinreichender Entleerung der Puffer-Energieversorgung 27, erzeugt die Steuereinheit 24 auch ohne Notbetätigung der Notbetätigungsorgane 39 ein Steuersignal, welches zur Folge hat, dass die Kopplungseinrichtung 72 in die Notbetätigungsstellung umgeschaltet wird, womit eine Handnotbetätigung ermöglicht ist.

Wie bereits zuvor erwähnt, können vielfältige unterschiedliche Ausgestaltungen des Antriebsstrangs 67, des Antriebsaggregats 68, der Antriebsverbindung 69 und der Kopplungseinrichtung 72 im Rahmen der Erfindung Einsatz finden. In den im Folgenden beschriebenen Figuren sind einige mögliche Ausgestaltungen beschrieben, ohne dass eine Einschränkung auf diese möglichen Ausgestaltungen erfolgen soll.

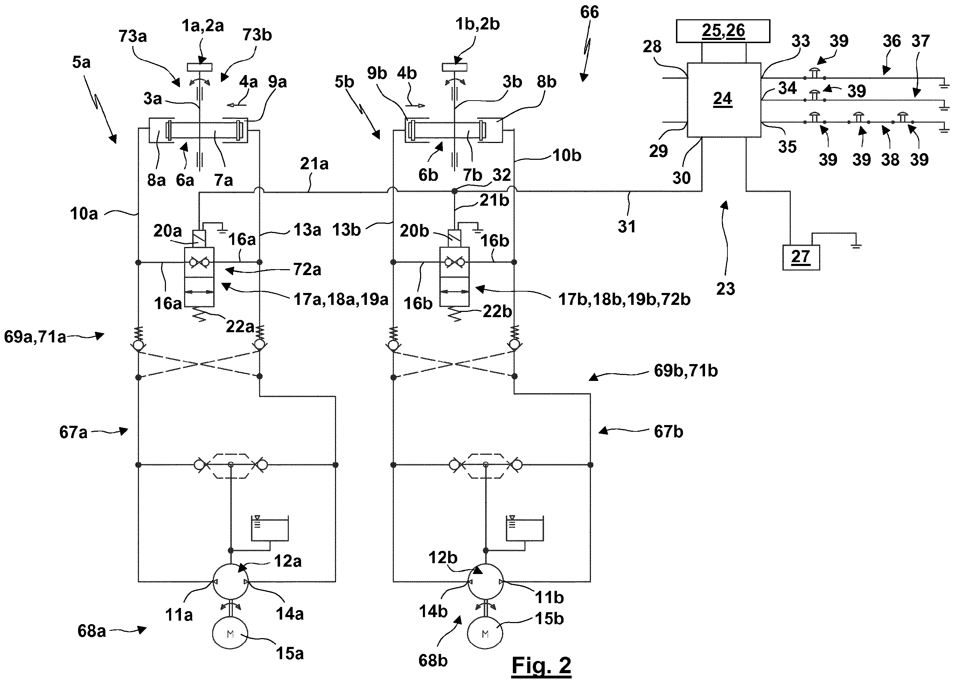

**Fig. 2** zeigt schematisch zwei Fahrzeugtüren 1a, 1b, bei welchen es sich insbesondere um Flügeltüren 2a, 2b handelt, welche über eine Verdrehung einer Drehsäule 3a, 3b in Öffnungsrichtungen 4a, 4b und eine Schließrichtung bewegt werden können. Hierbei sind die Fahrzeugtüren 1 bzw. Flügeltüren 2 lediglich symbolartig dargestellt, und eine etwaige Gelenk- oder Antriebsverbindung zwischen der Drehsäule 3 und der Fahrzeugtür 1 bzw. Flügeltür 2 ist nicht im Detail dargestellt. Die Bewegungen in die Öffnungsrichtungen 4a, 4b der Drehsäulen 3a, 3b und der Fahrzeugtüren 1a, 1b bzw. Flügeltüren 2a, 2b werden über identisch gestaltete fluidische Antriebskreise 5a, 5b herbeigeführt. Aus diesem Grund und zwecks Vereinfachung werden im Folgenden die fluidischen Antriebskreise 5a, 5b und deren Komponenten ohne die diese spezifizierenden ergänzenden Buchstaben a, b beschrieben, wobei dann die Beschreibung für beide fluidischen Antriebskreise 5a, 5b und deren Komponenten entsprechend gilt.

Der fluidische Antriebskreis 5 verfügt über einen Aktuator 6. Hierbei handelt es sich um einen doppelt wirkenden Aktuator, in welchem eine translatorische, fluidisch verursachte Bewegung eines Kolbens 7 in eine Drehbewegung der Drehsäule 3 umgewandelt wird. Vorzugsweise handelt es sich bei dem hier eingesetzten Aktuator 6 um eine fluidisch betätigte Kolben-ZylinderEinheit, wie diese insbesondere in einer der Druckschriften DE 10 2007 025 375 B4, DE 10 2008 009 558 B3, DE 10 2008 034 994 B3, EP 2 041 387 B1 oder DE 10 2012 107 522 B4 beschrieben ist, welche diesbezüglich zum Gegenstand der vorliegenden Patentanmeldung gemacht werden.

In dem Aktuator 6 trennt der Kolben 7 eine erste Druckkammer 8 von einer zweiten Druckkammer 9, wobei die Druckkammern 8, 9 entgegengesetzt auf den Kolben 7 wirken. Die erste Drucckammer 8 ist über eine erste Leitung 10 mit einem ersten Anschluss 11 einer Pumpe 12 verbunden. Entsprechend ist die zweite Druckkammer 9 über eine zweite Leitung 13 mit einem zweiten Anschluss 14 der Pumpe 12 verbunden. Die Pumpe 12 ist reversierbar und wird über einen reversierbaren Motor 15 angetrieben.

Zur Erzeugung der Bewegung in die Öffnungsrichtung 4 werden der Motor 15 und damit auch die Pumpe 12 in eine erste Antriebsrichtung angetrieben, in welcher die Pumpe 12 Fluid von dem ersten Anschluss 11 zu dem zweiten Anschluss 14 fördert. Somit fördert die Pumpe 12 Fluid aus der ersten Druckkammer 8 in die zweite Druckkammer 9.

Mit Umkehrung der Antriebsrichtung des Motors 15 und damit der Pumpe 12 in eine zweite Antriebsrichtung fördert die Pumpe 12 Fluid von dem Anschluss 14 zu dem Anschluss 11, womit Fluid von der zweiten Druckkammer 9 zu der ersten Druckkammer 8 gefördert wird, woraus eine Bewegung in eine Schließrichtung resultiert.

Die Leitungen 10, 13 sind über eine Kurzschlussverbindung 16 miteinander verbunden. In der Kurzschlussverbindung 16 ist eine Notbetätigungs-Ventileinrichtung 17 angeordnet, welche hier als singuläre Baueinheit 18 ausgebildet ist.

Für das dargestellte Ausführungsbeispiel ist die Notbetätigungs-Ventileinrichtung 17 als 2/2-Wege-Magnetventil 19 ausgebildet mit der in Fig. 2 wirksamen Schließ- oder Sperrstellung sowie der in Fig. 2 nicht wirksamen Öffnungs- oder Durchlassstellung. Das 2/2-Wege-Magnetventil 19 verfügt über eine elektrischen Steueranschluss 20. Die Beaufschlagung des elektrischen Steueranschlusses 20 erfolgt über eine elektrische Steuerleitung 21. Über eine Öffnungsfeder 22 ist die Notbetätigungs-Ventileinrichtung 17 in die Öffnungsstellung beaufschlagt, so dass ohne elektrische Beaufschlagung des Steueranschlusses 20 die Notbetätigungs-Ventileinrichtung 17 die Öffnungsstellung einnimmt. Es handelt sich somit um eine "stabile Öffnungsstellung".

Fig. 2 zeigt auch einen mit der Notbetätigungs-Ventileinrichtung 17 und den Steueranschlüssen 20 sowie den Steuerleitungen 21 gebildeten elektrischen Notbetätigungskreis 23. Der elektrische Notbetätigungskreis 23 verfügt hier über eine elektronische Steuereinheit oder CPU 24, so dass es sich um einen elektronischen Notbetätigungskreis handelt. Die elektronische Steuereinheit 24 wird über eine Haupt-Energieversorgung 25 mit elektrischer Leistung versorgt. Bei der Haupt-Energieversorgung 25 handelt es sich vorzugsweise um eine (Haupt-) Fahrzeugbatterie 26 und/oder einen Generator des Fahrzeugs. Über die Haupt-Energieversorgung 25 kann beispielsweise eine Bereitstellung einer Nenn-Versorgungsspannung von 24 V erfolgen.

Des Weiteren erfolgt eine Energieversorgung, zumindest für den Fall eines Einbruchs der Haupt-Energieversorgung 25, durch eine Puffer-Energieversorgung 27. Die Steuereinheit 24 weist Steuerlogik auf, mittels welcher ein Ladevorgang der Puffer-Energieversorgung 27 aus der Haupt-Energieversorgung 25 gesteuert und überwacht wird.

Die Steuereinheit 24 verfügt über einen Ausgangsanschluss 28, der mit einer Anzeige des Fahrzeugs, insbesondere im Bereich eines Fahrersitzes oder einer Fahrerkabine, verbunden werden kann. Die Steuereinheit 24 kann über den Ausgangsanschluss 28 an der Anzeige einen Hinweis erzeugen, dass eine im Folgenden noch erläuterte Notbetätigung erfolgt ist, und/oder Informationen zu dem Zustand der Puffer-Energieversorgung 27 oder dem Ladeverhalten der Puffer-Energieversorgung 27 anzeigen. Des Weiteren verfügt die Steuereinheit 24 über einen Eingangsanschluss 29, über welchen der Steuereinheit 24 eine Betriebsgröße des Fahrzeugs und/oder eine Umgebungsgröße übermittelt werden kann. Um lediglich ein nicht beschränkendes Beispiel zu nennen, kann über den Eingangsanschluss 29 eine Fahrgeschwindigkeit an die Steuereinheit 24 übermittelt werden, die dazu genutzt werden kann, trotz einer Notbetätigung eine Überführung der Notbetätigungs-Ventileinrichtung 17 in die Öffnungsstellung zu unterbinden, wenn die Fahrgeschwindigkeit größer als ein Schwellwert (beispielsweise 5 km/h) ist.

Die Steuereinheit 24 verfügt des Weiteren über einen Steuerausgang 30. Der Steuerausgang 30 ist über eine Steuerleitung 31 und eine Verzweigung 32 mit den Steuerleitungen 21a, 21b und somit mit den Steueranschlüssen 20a, 20b verbunden.

Die Steuereinheit 24 verfügt auch über Anschlüsse 33, 34, 35, an welche jeweils ein elektrischer Notbetätigungsstrang 36, 37, 38 angeschlossen ist. In den elektrischen Notbetätigungssträngen 36, 37, 38 ist jeweils mindestens ein manuelles Notbetätigungsorgan 39 angeordnet.

Im Folgenden wird davon ausgegangen, dass die dargestellten Notbetätigungs-Ventileinrichtungen 17a, 17b über den Notbetätigungsstrang 38 manuell gesteuert werden können, während die Notbetätigungsstränge 36, 37 für andere, hier nicht dargestellte fluidische Antriebskreise und andere Fahrzeugtüren bestimmt sind. Möglich ist aber auch, dass die manuellen Notbetätigungsorgane 39 des Notbetätigungsstrangs 38 im Inneren des Fahrzeugs angeordnet sind, wobei die Notbetätigungsorgane 39 dort für Passagiere oder den Fahrer zugänglich sind, während die Notbetätigungsstränge 36, 37 ebenfalls zur Steuerung der Notbetätigungs-Ventileinrichtungen 17a, 17b dienen, aber hier die manuellen Notbetätigungsorgane 39 außerhalb des Fahrzeugs angeordnet sind.

In dem Notbetätigungsstrang 38 sind für das dargestellte Ausführungsbeispiel drei Notbetätigungsorgane 39 in Reihenschaltung dem Anschluss 35 vorgeordnet, so dass bei Betätigung eines der Notbetätigungsorgane 39 in dem Notbetätigungsstrang 38 ein entsprechendes Notbetätigungssignal an die Steuereinheit 24 übermittelt wird, welches dann an den Ausgang 39 durchgeleitet wird oder seitens der Steuereinheit mit geeigneter Steuerlogik dazu genutzt wird, um an dem Ausgang 30 ein Steuersignal zu erzeugen, welches die bei der Notbetätigung gewünschte Öffnungsstellung der Notbetätigungs-Ventileinrichtung 17 herbeiführen kann.

Vorzugsweise befinden/befindet sich der fluidische Antriebskreis 5, der elektrische Notbetätigungskreis 23 und/oder die Steuereinheit 24 im Bereich der Fahrzeugtür oder im unmittelbaren Umgebungsbereich eines Türrahmens der Fahrzeugtür.

Gemäß Fig. 2 findet somit ein fluidisch-mechanischer Antriebskreis 71 Einsatz, der einerseits als fluidischen Bestandteil den fluidischen Antriebskreis 5 aufweist und andererseits als mechanische Antriebsverbindung 73 Bestandteil die Drehsäule 3 mit den hiermit verbundenen Antriebs- und Getriebeelementen aufweist. Die mechanische Antriebsverbindung 73 und der fluidische Antriebskreis 5 sind hierbei über den Aktuator 6 miteinander gekoppelt. Das Antriebsaggregat 68 besteht hier aus dem Motor 15 und der Pumpe 12. Schließlich bilden die Kurzschlussverbindung 16 und die darin angeordnete Notbetätigungs-Ventileinrichtung 17 die Kopplungseinrichtung 72.

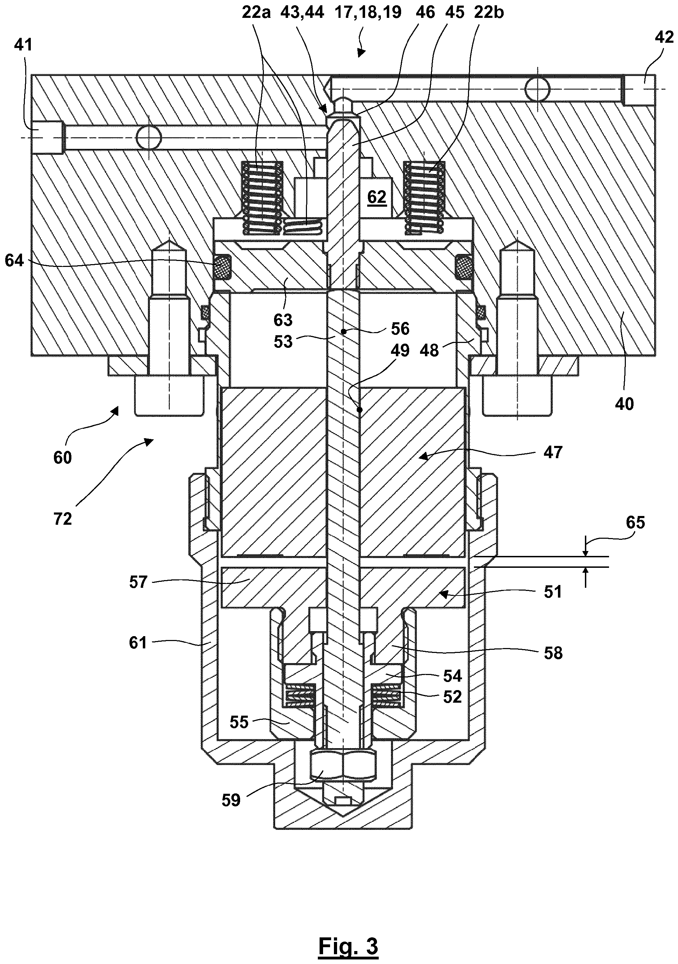

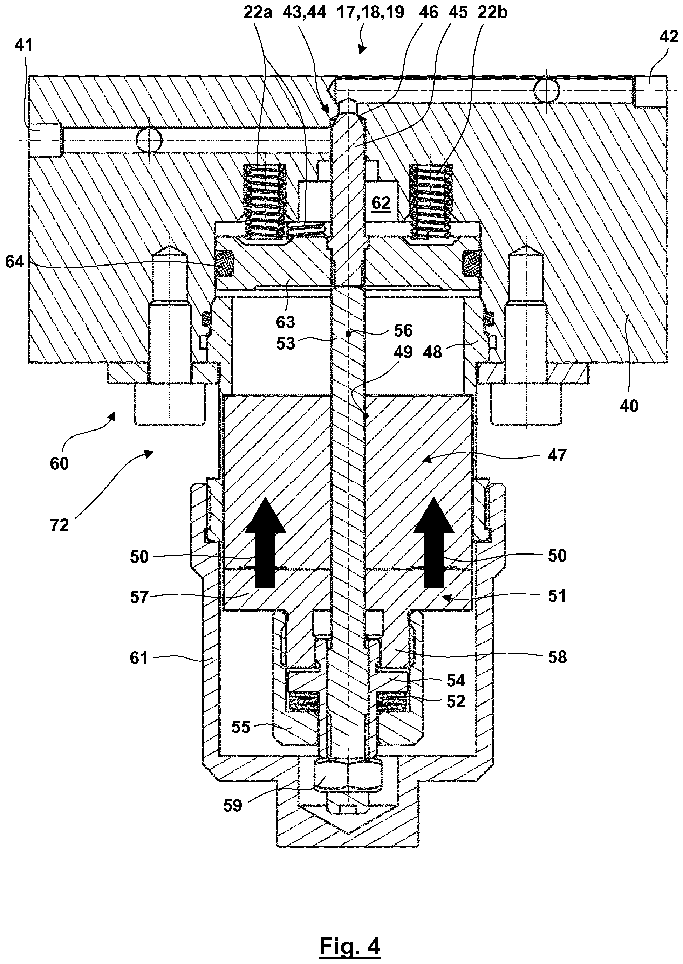

**Fig. 3** **und** **4** zeigen eine mögliche Ausgestaltung einer Notbetätigungs-Ventileinrichtung 17, wobei Fig. 3 die Öffnungsstellung der Notbetätigungs-Ventileinrichtung 17 (welche die Notbetätigungsstellung der Kopplungseinrichtung 72 ist) und Fig. 4 die Schließstellung der Notbetätigungs-Ventileinrichtung 17 (welche die Antriebsstellung der Kopplungseinrichtung 72 ist) zeigt.

Ein hier teilgeschnitten dargestelltes Gehäuseteil 40 verfügt über einen ersten Druckkammeranschluss 41 und einen zweiten Druckkammeranschluss 42. Der erste Druckkammeranschluss 41 ist über die Kurzschlussverbindung 16 und die erste Leitung 10 mit der Druckkammer 8 verbunden. Entsprechend ist der zweite Druckkammeranschluss 42 über die Kurzschlussverbindung 16 und die zweite Leitung 13 mit der Druckkammer 9 verbunden. In dem Gehäuseteil 40 sind die Druckkammeranschlüsse 41, 42 über innenliegende Kanäle oder Bohrungen und ein Ventil 43, welches hier als Sitzventil 44 mit einem Ventilkörper 45 und einem von dem Gehäuseteil 40 ausgebildeten Ventilsitz 46 gebildet ist, miteinander verbunden. In Fig. 3 befindet sich das Ventil 43 in der geöffneten Stellung, in welcher der Ventilkörper 45 beabstandet von dem Ventilsitz 46 angeordnet ist. Hingegen befindet sich in Fig. 4 das Ventil 43 in der Schließstellung, in welcher der Ventilkörper 45 mit einer Anpresskraft an den Ventilsitz 46 gepresst wird. In der Schließstellung ist ein von dem Ventil 43 bereitgestellter Übertrittsquerschnitt für Fluid abgesperrt.

Die Notbetätigungs-Ventileinrichtung 17 verfügt über einen Haftmagneten 47, der hier lediglich schematisch dargestellt ist. Der Haftmagnet 47 ist vorzugsweise wie eingangs erläutert ausgebildet, ist an dem Gehäuseteil 40 über eine Traghülse 48 gehalten und fixiert, verfügt über einen nicht bewegten Kern, der eine Innenbohrung 49 aufweist, und verfügt über eine Spule, die elektrisch mit dem an dem Steueranschluss 20 anliegenden Steuersignal beaufschlagt ist. Der Haftmagnet 47 erzeugt bei Beaufschlagung mit einem Steuersignal eine in eine Schließrichtung des Ventils 43 wirkende Schließ- und/oder Haltekraft 50 auf einen Haltekörper 51. Der Haltekörper 51 ist über eine Ausgleichsfeder 52 mit dem Ventilkörper 45 gekoppelt, wobei diese Kopplung derart erfolgt, dass
- vor der Anlage des Ventilkörpers 45 an dem Ventilsitz 46 eine gemeinsame Bewegung des Haltekörpers 51 mit dem Ventilkörper 45 erfolgt,
- während bei Anlage des Ventilkörpers 45 an dem Ventilsitz 44 eine weitere Bewegung des Haltekörpers 51 zu einer Relativbewegung zwischen dem Haltekörper 51 und dem Ventilkörper 45 führt, die mit einer Veränderung der Beaufschlagung der Ausgleichsfeder 52 und einer Veränderung der Anpresskraft des Ventilkörpers 45 an den Ventilsitz 44 einhergeht.

Für das dargestellte Ausführungsbeispiel ist der Ventilkörper 45 über
- einen Ventilstößel 53, der in dem dem Ventilsitz 44 abgewandten Endbereich des Ventilkörpers 45 an diesem lose anliegt,
- einen an dem Ventilstößel 53 befestigten Federteller 54,
- die mit einem Federfußpunkt an dem Federteller 54 abgestützte Ausgleichsfeder 52 und
- eine an dem anderen Federfußpunkt der Ausgleichsfeder 52 abgestützte Überwurfhülse 55
mit dem mit der Überwurfhülse 55 verschraubten Haltekörper 51 mechanisch in dieser Reihenfolge gekoppelt.

Der Ventilstößel 53 erstreckt sich mit einem eine Relativbewegung ermöglichenden radialen Spiel durch die Innenbohrung 49 des Haftmagneten 47. Der Haltekörper 51, der Federteller 54 und der hiermit verbundene Endbereich des Ventilstößels 53, die Ausgleichsfeder 52 und die Überwurfhülse 55 befinden sich auf der dem Ventil 43 abgewandten Seite des Haftmagneten 47.

Für das dargestellte Ausführungsbeispiel ist der Federteller 54 in einem Halblängsschnitt T-förmig ausgebildet, wobei der Vertikalschenkel des T radial nach außen zu einer Längs- und Betätigungsachse 56 des Ventilstößels 53 orientiert ist und der Horizontalschenkel des T mit einer Übergangs- oder Presspassung an der Mantelfläche des Ventilstößels 53 anliegt. An dem Vertikalschenkel des T ist (auf der dem Haltekörper 51 abgewandten Seite) die Ausgleichsfeder 52 abgestützt.

Bei der Ausgleichsfeder 52 handelt es sich vorzugsweise um ein Paket von Tellerfedern.

Der Haltekörper 51 verfügt über eine Haltescheibe 57 sowie auf der dem Haftmagneten 47 abgewandten Seite über einen ringförmigen Fortsatz 58. Eine Innenfläche des ringförmigen Fortsatzes 58 bildet dabei eine Führungsfläche für einen Teilbereich des Horizontalschenkels des T des Federtellers 54. Die Außenfläche des ringförmigen Fortsatzes 58 bildet ein Außengewinde aus, mit welchem ein entsprechendes Innengewinde der Überwurfhülse 55 verschraubt ist.

Der Ventilstößel 53 erstreckt sich durch den Federteller 54 hindurch und aus diesem heraus. Der aus dem Federteller 54 auskragende Endbereich ist mit einem Gewinde ausgestattet, auf welches eine Mutter 59 aufgeschraubt ist. Über den Schraubwinkel der Mutter 59 kann eine Einstellung der Anpresskraft des Ventilkörpers 45 auf den Ventilsitz 46 in der Schließstellung erfolgen.

Die Traghülse 48 ist unter Abdichtung in eine zu dem Ventil 43 führende und den Ventilsitz 46 ausbildende Ausnehmung 62 des Gehäuseteils 40 eingesetzt und hieran über eine Schraubverbindung 60 gesichert. Mit der Traghülse 48 ist ein Gehäusedeckel 61 verschraubt, in dessen Innenraum der Haltekörper 51, der Federteller 54, die Ausgleichsfeder 52 und die Überwurfhülse 55 mit einem Teil des Ventilstößels 53 und der Mutter 59 angeordnet sind. Die Ausnehmung 62 ist abgestuft, bildet im Bereich des Bodens den Ventilsitz 46 aus und in diese münden die mit den Druckkammeranschlüssen 41, 42 verbundenen Kanäle.

Der Ventilkörper 45 trägt einen Ventilkörperteller 63, wobei der Ventilkörperteller 63 und der Ventilkörper 45 in der Darstellung gemäß Fig. 3 und 4 einen Längsschnitt entsprechend einem umgekehrten T bilden und der Vertikalschenkel des T von dem Ventilkörper 45 ausgebildet ist sowie der Horizontalschenkel des T von dem Ventilkörperteller 63 ausgebildet ist. Randseitig ist der Ventilkörperteller 63 über ein Dichtelement 64 gegenüber der hier zylindrischen Begrenzung der Ausnehmung 62 abgedichtet.

Der Ventilkörper 45 und der Ventilkörperteller 63 sind begrenzt in Richtung der Längs- und Betätigungsachse 56 in der Ausnehmung zwischen der Öffnungs- und Schließstellung verschieblich. Zwischen dem Gehäuseteil 44 und dem Ventilkörperteller 63 wirkt die Öffnungsfeder 22, welche hier mit mehreren über den Umfang verteilten Teilöffnungsfedern 22a, 22b, ... gebildet ist. Abweichend zu den Figuren liegen die Teilöffnungsfedern 22a, 22b, ... an dem Ventilkörperteller 63, u. U. auch unter einer Vorspannung, über den gesamten Hub des Ventilkörpertellers 63 an.

Die Funktionsweise der Notbetätigungs-Ventileinrichtung 17 ist wie folgt:
a) Um zunächst für den Normalbetrieb aus einer etwaigen Öffnungsstellung die Schließstellung der Notbetätigungs-Ventileinrichtung 17 herbeizuführen, erzeugt die Steuereinheit 24 ein Steuersignal an dem Steueranschluss 20 der Notbetätigungs-Ventileinrichtung 17 in einer Höhe, die ausreichend ist, dass der Haltemagnet 47 eine auf den Haltekörper 51 wirkende Schließkraft 50 erzeugt, welche größer ist als die Kraft in der Öffnungsfeder 22. Somit bewegen sich in einer gemeinsamen Bewegung in einem ersten Teilhub des Schließhubs der Ventilkörper 45, der Ventilkörperteller 63, der Ventilstößel 53, der Federteller 54, die Ausgleichsfeder 52 (zunächst ohne elastische Verformung derselben), die Überwurfhülse 55 und der Haltekörper 51 in Richtung des Ventilsitzes 46, womit sich die Höhe des Spaltes 65 zwischen dem Haltekörper 51 und dem Haltemagneten 47 verringert.
b) Bevor der Spalt 65 vollständig geschlossen ist und der Haltekörper 51 an dem Haftmagneten 47 anliegt, kommt der Ventilkörper 45 zur Anlage an den Ventilsitz 46, womit der zweite Teilhub des Schließhubs beginnt. Eine dann weiter ansteigende Schließkraft 50 führt dazu, dass der Haltekörper 51 weiter in Richtung des Haftmagneten 47 bewegt wird mit einer weiteren Verringerung der Höhe des Spaltes 65. Andererseits kann angesichts der Anlage des Ventilkörpers 45 an dem Ventilsitz 46 und dem an dem Ventilstößel 53 befestigten Federteller 54 der von dem Federteller 54 gebildete Federfußpunkt der Ausgleichsfeder 52 nicht weiter bewegt werden. Somit geht die Bewegung des Haltekörpers 51 mit der daran befestigten Überwurfhülse 55 mit einer elastischen Verformung der Ausgleichsfeder 52 einher, welche wiederum eine Anpressung des Ventilkörpers 45 mit einer sich mit dem zweiten Teilhub vergrößernden Anpresskraft an den Ventilsitz 46 zu Folge hat.
   Hierbei steigt in dem zweiten Teilhub mit zunehmender Bewegung die Vorspannkraft der Öffnungsfeder 22, so dass über den zweiten Teilhub eine unterschiedlich große Schließkraft 50 erzeugt werden muss. Andererseits steigt in dem zweiten Teilhub u. U. auch bei gleichbleibendem Steuersignal die Schließkraft 50 bei einer sich verringernden Höhe des Spaltes 65 an.
c) Am Ende des zweiten Teilhubs kommt gemäß Fig. 4 der Haltekörper 51 zur Anlage an den Haftmagneten 47, womit eine maximale Komprimierung der Ausgleichsfeder 52 und eine maximale Anpressung des Ventilkörpers 45 an dem Ventilsitz 46 erreicht ist. Für an dem Haltemagneten 47 anliegenden Haltekörper 51 kann die hierdurch erreichte Schließstellung mit einer minimalen elektrischen Beaufschlagung des Haftmagneten 47 gewährleistet werden, da der magnetische Fluss zwischen dem Haftmagneten 47 und dem Haltekörper 51 optimal ist.
d) Wird dann in der eingenommen Schließstellung (bei Einbruch der elektrischen Leistungsversorgung durch die Haupt-Energieversorgung 25 und ungenügendem oder hinreichend abgefallenem Ladezustand der Puffer-Energieversorgung 27 und/oder bei einer manuellen Notbetätigung eines Notbetätigungsorgans 39) durch die Steuereinheit 24 das Steuersignal so reduziert, dass die von der Öffnungsfeder 22 hervorgerufene Öffnungskraft größer ist als die Haltekraft 50, so drückt die Öffnungsfeder 22 den Ventilkörperteller 63 und damit auch den Ventilkörper 45 von dem Ventilsitz 46 weg, womit sich zwischen dem Haltemagneten 47 und dem Haltekörper 51 ein sich vergrößernder Spalt 65 ergibt. Während dieser Öffnungsbewegung kommt es zunächst zur Entlastung der Ausgleichsfeder 52, ohne dass sich der Ventilkörper 45 relativ zu dem Ventilsitz 46 bewegt, und dann anschließend zu der gemeinsamen Bewegung des Haltekörpers 51, der Ausgleichsfeder 52, des Federtellers 54, des Ventilstößels 53 und des Ventilkörpers 45, bis die Öffnungsstellung des Ventils 43 erreicht ist.

Je nach Stellung des Haltekörpers 51 ändert sich die Induktivität des Haftmagneten 47. Über ein geeignetes Testsignal kann eine Auswertung der Induktivität durch die Steuereinheit 24 erfolgen, womit dann auch ein Rückschluss möglich ist, ob sich der Haftmagnet 47 und damit auch das Ventil 43 sowie die Notbetätigungs-Ventileinrichtung 17 in der Öffnungsstellung oder der Schließstellung befindet. Möglich ist hierbei sogar, dass dem Steuersignal ein hochfrequentes Signal, u. U. auch mit kleiner Amplitude, überlagert ist, welches dann zur Auswertung der Induktivität und damit mittelbar zur Erfassung der Stellung des Haltekörpers 51 genutzt wird.

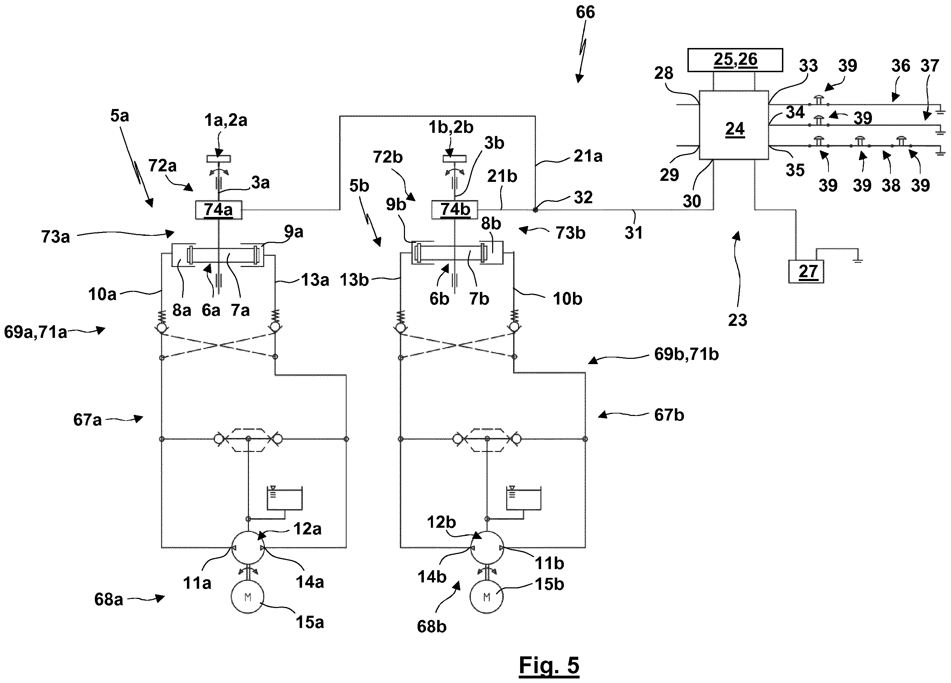

Fig. 5 zeigt eine Fahrzeugtür-Antriebsbaugruppe 66, welche bis auf die im Folgenden erläuterten Änderungen entsprechend der Fahrzeugtür-Antriebsbaugruppe 66 gemäß Fig. 2 ausgebildet ist. Die Fahrzeugtür-Antriebsbaugruppe 66 verfügt hier nicht über die Kurzschlussverbindung 16 sowie die darin angeordnete Notbetätigungs-Ventileinrichtung 17. Somit ist keine Handnotbetätigung möglich, bei welcher das Fluid durch Handnotbetätigungskräfte von einer Drucckammer 8 (bzw. Druckkammern 9) in die andere Druckkammer 9 (bzw. Druckkammer 8) über die Kurzschlussverbindung 16 geschoben werden kann. Stattdessen ist hier in eine mechanische Antriebsverbindung 73 als Kopplungseinrichtung 72 eine Kupplung 74 integriert. In diesem Fall steuert die elektronische Steuereinheit 24 über den Steuerausgang 30 und die Steuerleitungen 31, 21 den Betriebszustand der Kupplung 74, so dass je nach von der elektronischen Steuereinheit 24 erzeugtem Steuersignal die Kupplung 74 eine Notbetätigungsstellung oder Öffnungsstellung oder aber eine Antriebsstellung oder eine Schließstellung einnimmt. In der Schließstellung wird die Stellung der Fahrzeugtür 1 über den Aktuator 6 vorgegeben, während in der Öffnungsstellung unabhängig von der Betriebsstellung des Aktuators 6 eine Öffnungs- und Schließbewegung über Handnotbetätigungskräfte herbeigeführt werden kann.

Für die gewählte schematische Darstellung kuppelt die Kupplung 74 zwei Abschnitte der Drehsäule 3. Durchaus möglich ist, dass die Kupplung 74 auch an beliebiger anderer Stelle der mechanischen Antriebsverbindung 73 zwischen dem Aktuator 6 und der Fahrzeugtür 2 angeordnet ist.

Grundsätzlich kann im Rahmen der Erfindung eine beliebige, infolge eines elektrischen Steuersignals schaltbare Kupplung 74 mit einem beliebigen zur Übertragung eines Kupplungsmoments dienenden physikalischen Grundprinzip eingesetzt werden, beispielsweise eine elektromagnetische Kupplung, eine Reibungskupplung, eine verrastende Kupplung, eine verriegelnde Kupplung und/oder eine formschlüssige Kupplung.

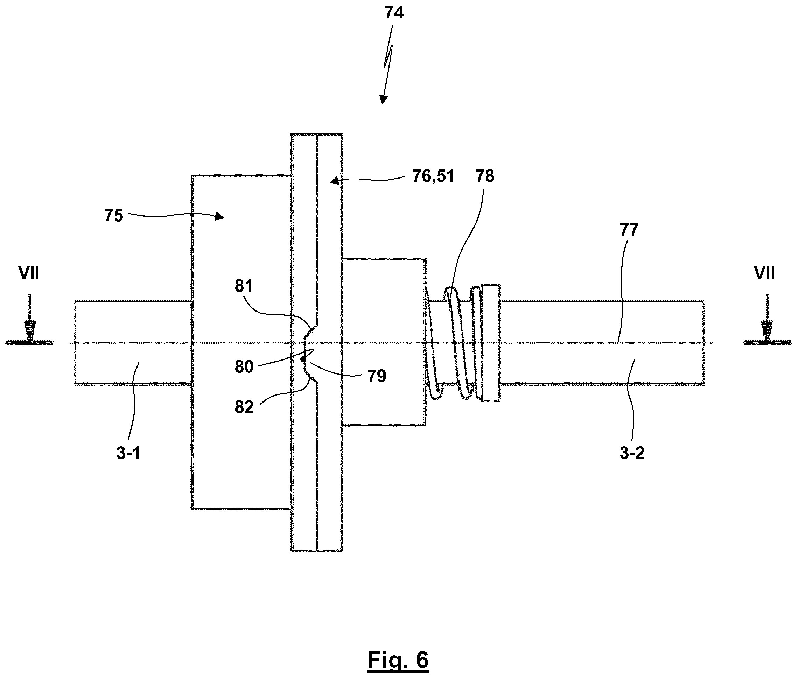

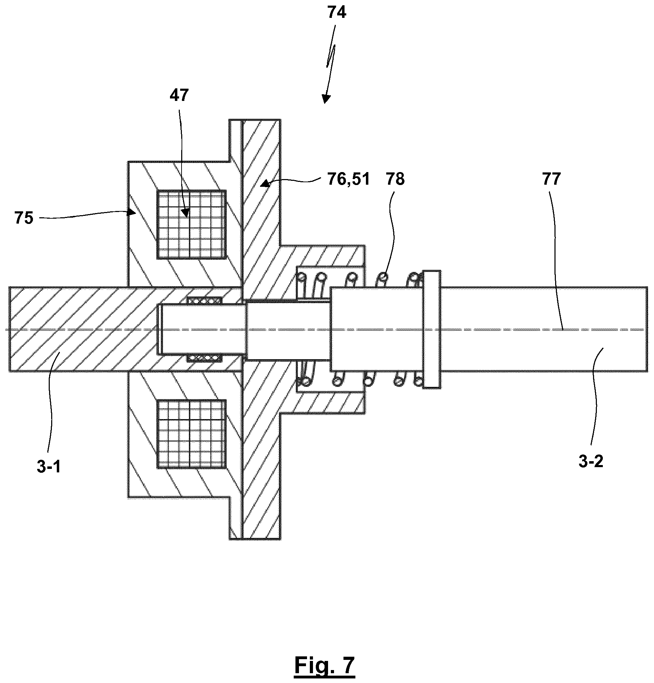

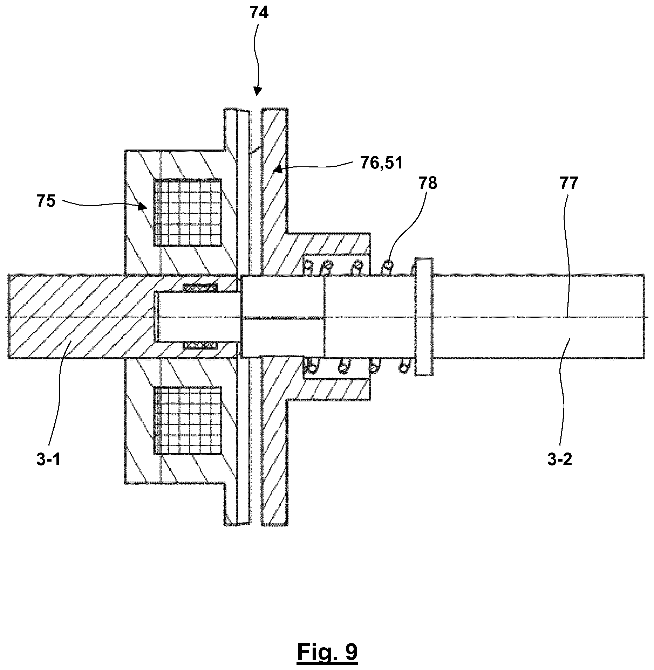

In **Fig. 6 bis 9** ist eine beispielhaft einsetzbare Kupplung 74 schematisch dargestellt:
Die Kupplung 74 verbindet in der Schließstellung gemäß Fig. 6 und 7 zwei Antriebselemente der mechanischen Antriebsverbindung 73, bei welchen es sich für das dargestellte Ausführungsbeispiel um Abschnitte 3-1 und 3-2 einer Drehsäule 3 handelt. Die beiden Abschnitte 3-1 und 3-2 der Drehsäule 3 tragen jeweils eine Kupplungshälfte 75, 76 und sind mit dieser drehfest verbunden. Die Kupplungshälfte 75 weist einen Haftmagneten 47 auf, während die Kupplungshälfte 76 einen Haltekörper 51 ausbildet. Die Kupplungshälfte 76 ist dabei in Richtung einer Längsachse 77 verschieblich gegenüber dem Abschnitt 3-2 der Drehsäule 3 gelagert und über eine Druckfeder 78 in Richtung der Kupplungshälfte 75 beaufschlagt. Die Druckfeder 78, welche vorzugsweise auch in der Schließstellung gemäß Fig. 6 vorgespannt ist, stützt sich dabei mit einem Federfußpunkt an der Kupplungshälfte 76 ab, während der andere Federfußpunkt an einem Absatz oder Bund des Abschnittes 3-2 der Drehsäule 3 abgestützt ist.

In der in Fig. 6 und 7 wirksamen Haft- oder Haltestellung schließt der Haltekörper 51 infolge des unmittelbaren Kontaktes mit der Kupplungshälfte 75 den magnetischen Fluss des Haftmagneten 47, so dass eine große Haltekraft erzeugt wird. Die Gesamtkraft, mit der die Kupplungshälfte 76 gegen die Kupplungshälfte 75 gepresst wird, entspricht der Summe aus der von der Druckfeder 78 auf die Kupplungshälfte 76 ausgeübten Federkraft und der zwischen dem Haftmagneten 47 und dem Haltekörper 71 wirkenden Haft- oder Haltekraft. Diese Gesamtkraft erzeugt einen Schwellwert für ein auf die Kupplung 74 wirkendes Kupplungsmoment, für welches ein Lösen oder Durchrutschen der Kupplung 74 erfolgt, welches vorzugsweise größer ist als die mittels einer Handnotbetätigung applizierbaren Handnotbetätigungskräfte.

Wird hingegen von der elektronischen Steuereinheit 24 das Steuersignal für die Kupplung 74 verringert oder beseitigt, entfällt die von dem Haftmagneten 47 erzeugte Haft- oder Haltekraft, so dass lediglich die Federkraft die Kupplungshälfte 76 gegen die Kupplungshälfte 75 presst. Dies hat einen Abfall des vorgenannten Schwellwerts zur Folge, womit dieser vorzugsweise niedriger ist als die bei einer Handnotbetätigung aufgebrachten Handnotbetätigungskräfte, so dass die Handnotbetätigung mit einer Öffnung der Fahrzeugtür 1 infolge einer Relativbewegung der Kupplungshälften 75, 76 möglich ist.

Grundsätzlich möglich ist hierbei, dass die Kupplung 74 als Reibungskupplung ausgebildet ist, bei welcher sich der Schwellwert ergibt aus der zuvor genannten Gesamtkraft und dem Reibungskoeffizienten im Bereich der Kontaktflächen zwischen den beiden Kupplungshälften 75, 76.

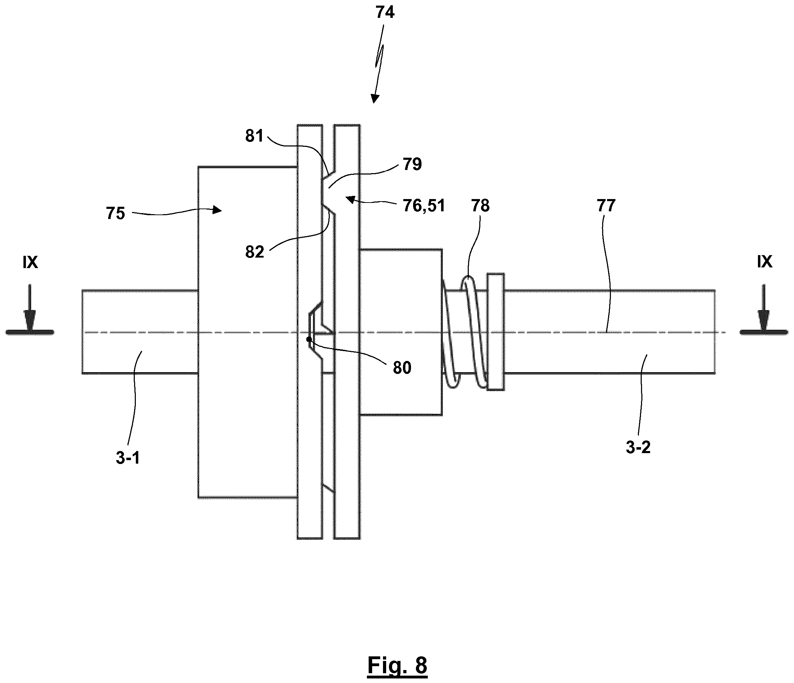

In den Fig. 6 bis 9 ist aber eine andere Variante dargestellt: Wie insbesondere in den Fig. 6, 8 zu erkennen ist, besitzt eine Kupplungshälfte 76 mindesten einen beabstandet von der Längsachse 77 angeordneten Vorsprung 79, der in der Schließstellung gemäß Fig. 6 und 7 in einer zugeordneten Vertiefung 80 der anderen Kupplungshälfte 65 angeordnet ist. Hierbei verfügen der Vorsprung 79 und die Vertiefung 80 über korrespondierende Geometrien und liegen in Umfangsrichtung in beide Richtungen über Schrägen 81, 82 vorzugsweise spielfrei aneinander an. Werden bei einer Handnotbetätigung Handnotbetätigungskräfte auf die Fahrzeugtür und damit auf die Kupplung 74 aufgebracht, führt dies im Bereich der Schrägen 81, 82 zu der Erzeugung einer Kraftkomponente, welche in Richtung der Längsachse 77 angeordnet ist und deren Anteil von dem Neigungswinkel der Schräge 81, 82 abhängig ist. Werden hinreichende Handnotbetätigungskräfte aufgebracht, wird infolge dieser Kraftkomponente die Kupplungshälfte 76 entgegen der Beaufschlagung durch die Druckfeder 78 von der Kupplungshälfte 75 weg bewegt, so dass der Vorsprung 79 aus der Vertiefung 80 austreten kann. Auch wenn hierein Formschluss zwischen dem Vorsprung 79 und der Vertiefung 80 erzeugt wird, wird einen entsprechende Ausführungsform der Kupplung 74 im Rahmen der vorliegenden Erfindung unter eine Reibungskupplung oder eine Rutschkupplung subsumiert, da hier der Schwellwert für das Lösen der Kupplung 74 auch durch die wirkende Reibung, nämlich die Reibung im Bereich der Schrägen 81, 82, vorgegeben wird. Hierbei wirkt eine Schräge 81 für die Bereitstellung des Schwellwerts in Öffnungsrichtung, während die andere Schräge 82 für die Bereitstellung des Schwellwerts in Schließrichtung dient. Im Gegensatz zu einer herkömmlichen Rutschkupplung hat diese Ausgestaltungsform der Kupplung 74 den Vorteil, dass ein Schließen der Kupplung 74 mit dem Eintritt des Vorsprungs 79 in die Vertiefung 80 nur in einer vorbestimmten Relativlage zwischen den Kupplungshälften 75, 76 möglich ist, was für die Bereitstellung einer Referenzlage des Antriebsstrangs 67 und die Ermöglichung einer exakten Steuerung der Stellung der Fahrzeugtür 1 durch den Antriebsstrang 67 vorteilhaft ist.

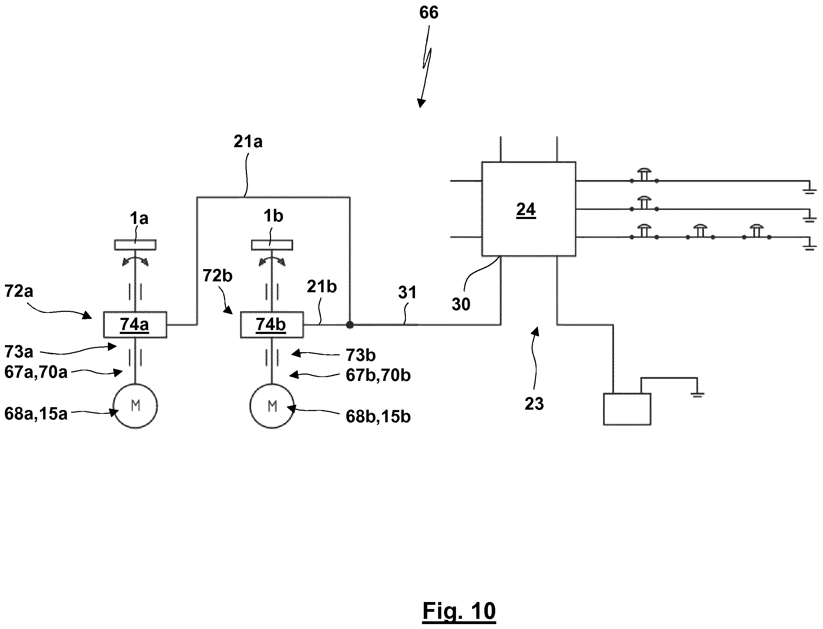

Für das Ausführungsbeispiel gemäß **Fig. 10** verfügt die Fahrzeugtür-Antriebsbaugruppe 66 nicht über einen fluidischen Antriebskreis 5. Vielmehr ist hier der Antriebsstrang 67 als elektromechanischer Antriebsstrang 70 ausgebildet. In diesem elektromechanischen Antriebsstrang 70 ist das Antriebsaggregat 68 von einem elektrischen Motor 15 ausgebildet und unmittelbar über eine mechanische Antriebsverbindung 73 mit der Fahrzeugtür 1 verbunden. In der mechanischen Antriebsverbindung 73 ist hierbei eine Kupplung 74 angeordnet. Eine Ansteuerung der Kupplung 74 erfolgt hierbei, wie für die anderen Ausführungsbeispiele erläutert, über einen elektrischen Notbetätigungskreis 23 durch die elektronische Steuereinheit 24 und die Steuerleitungen 31, 21.

Im Rahmen der Erfindung kann ein Haftmagnet 47 Einsatz finden, welcher die erforderliche Haftwirkung bei einem Strom im Bereich von 0,02 A bis 0,3 A (vorzugsweise im Bereich von 0,03 A bis 0,15 A) bei eine Spannung im Bereich von 1 V bis 5 V oder 2 V bis 4 V bereitstellt.

Für das dargestellte Ausführungsbeispiel der Kupplung 74 erfolgt eine unmittelbare Umwandlung des elektrischen Steuersignals an dem Steueranschluss 20 mittels eines Elektromagneten in eine Kupplungskraft. Möglich ist aber durchaus auch, dass die Kupplung 74 elektrofluidisch betätigt wird, wobei in diesem Fall durch das elektrische Steuersignal ein Magnetventil umgeschaltet wird, welches einen fluidischen Druck steuert, der wiederum die Kupplungskraft in der Kupplung 74 steuert, in dem der fluidische Druck auf einen Kolben der Kupplung 74 wirkt.

Sofern in der vorliegenden Anmeldung von einem Fluid die Rede ist, kann es sich um ein Hydraulikfluid oder ein Pneumatikfluid handeln.

### BEZUGSZEICHENLISTE

- 1: Fahrzeugtür
- 2: Flügeltür
- 3: Drehsäule
- 4: Öffnungsrichtung
- 5: fluidischer Antriebskreis
- 6: Aktuator
- 7: Kolben
- 8: erste Druckkammer
- 9: zweite Druckkammer
- 10: erste Leitung
- 11: erster Anschluss
- 12: Pumpe
- 13: zweite Leitung
- 14: zweiter Anschluss
- 15: Motor
- 16: Kurzschlussverbindung
- 17: Notbetätigungs-Ventileinrichtung
- 18: singuläre Baueinheit
- 19: 2/2-Wege-Magnetventil
- 20: Steueranschluss
- 21: Steuerleitung
- 22: Öffnungsfeder
- 23: elektrischer Notbetätigungskreis
- 24: elektronische Steuereinheit
- 25: Haupt-Energieversorgung
- 26: Fahrzeugbatterie
- 27: Puffer-Energieversorgung
- 28: Ausgangsanschluss
- 29: Eingangsanschluss
- 30: Steuerausgang
- 31: Steuerleitung
- 32: Verzweigung
- 33: Anschluss
- 34: Anschluss
- 35: Anschluss
- 36: elektrischer Notbetätigungsstrang
- 37: elektrischer Notbetätigungsstrang
- 38: elektrischer Notbetätigungsstrang
- 39: manuelles Notbetätigungsorgan
- 40: Gehäuseteil
- 41: erster Druckkammeranschluss
- 42: zweiter Druckkammeranschluss
- 43: Ventil
- 44: Sitzventil
- 45: Ventilkörper
- 46: Ventilsitz
- 47: Haftmagnet
- 48: Traghülse
- 49: Innenbohrung
- 50: Schließ- und/oder Haltekraft
- 51: Haltekörper
- 52: Ausgleichsfeder
- 53: Ventilstößel
- 54: Federteller
- 55: Überwurfhülse
- 56: Längs- und Betätigungsachse
- 57: Haltescheibe
- 58: ringförmigen Fortsatz
- 59: Mutter
- 60: Schraubverbindung
- 61: Gehäusedeckel
- 62: Ausnehmung
- 63: Ventilkörperteller
- 64: Dichtelement
- 65: Spalt
- 66: Fahrzeugtür-Antriebsbaugruppe
- 67: Antriebsstrang
- 68: Antriebsaggregat
- 69: Antriebsverbindung
- 70: elektromechanischer Antriebsstrang
- 71: fluidisch-mechanischer Antriebsstrang
- 72: Kopplungseinrichtung
- 73: mechanische Antriebsverbindung
- 74: Kupplung
- 75: Kupplungshälfte
- 76: Kupplungshälfte
- 77: Längsachse
- 78: Druckfeder
- 79: Vorsprung
- 80: Vertiefung
- 81: Schräge
- 82: Schräge

## Patentansprüche

1. Fahrzeugtür-Antriebsbaugruppe (66) für eine Fahrzeugtür (1) eines Fahrzeugs, insbesondere eines Busses oder einer Bahn, mit
a) einem Antriebsstrang (67), über welchen eine Schließbewegung und eine Öffnungsbewegung der Fahrzeugtür (1) herbeiführbar ist und der
aa) ein Antriebsaggregat (68) aufweist und
ab) eine über einen elektrischen Steueranschluss (20) betätigte Kopplungseinrichtung (72) aufweist, die je nach Beaufschlagung des elektrischen Steueranschlusses (20)
- eine Antriebsstellung, in der eine Schließbewegung und/oder eine Öffnungsbewegung der Fahrzeugtür (1) über das Antriebsaggregat (68) herbeiführbar ist, und
- eine Notbetätigungsstellung, in der eine Schließbewegung und/oder eine Öffnungsbewegung der Fahrzeugtür (1) über eine manuell unmittelbar auf die Fahrzeugtür (1) einwirkende Handnotbetätigung herbeiführbar ist, einnimmt und/oder in dieser gehalten wird und
b) einem elektrischen Notbetätigungskreis (23), der mindestens ein Notbetätigungsorgan (39) und eine elektrische Leistungsversorgung aufweist und der den Steueranschluss (20) der Kopplungseinrichtung (72) derart ansteuert, dass die Kopplungseinrichtung (72)
ba) die Antriebsstellung einnimmt oder in der Antriebsstellung gehalten wird, wenn kein Einbruch der elektrischen Leistungsversorgung vorliegt und keine Notbetätigung des Notbetätigungsorgans (39) vorliegt, und
bb) die Notbetätigungsstellung einnimmt oder in der Notbetätigungsstellung gehalten wird, wenn ein Einbruch der elektrischen Leistungsversorgung vorliegt oder eine Notbetätigung des Notbetätigungsorgans (39) vorliegt,
**dadurch gekennzeichnet, dass**
c) die elektrische Leistungsversorgung des elektrischen Notbetätigungskreises (23) eine Haupt-Energieversorgung (25) ist und eine von der Haupt-Energieversorgung (25) des Fahrzeugs aufladbare Puffer-Energieversorgung (27) vorhanden ist, welche
ca) bei Einbruch der elektrischen Leistungsversorgung durch die Haupt-Energieversorgung (25) ohne Notbetätigung des Notbetätigungsorgans (39) noch eine Erzeugung eines Steuersignals für die Kopplungseinrichtung (72) in dem elektrischen Notbetätigungskreis (23) ermöglicht, mit welchem die Kopplungseinrichtung (72) in die Antriebsstellung überführt wird oder in der Antriebsstellung gehalten wird,
cb) bei Einbruch der elektrischen Leistungsversorgung durch die Haupt-Energieversorgung (25) und vorliegender Notbetätigung des Notbetätigungsorgans (39) eine Erzeugung eines Steuersignals für die Kopplungseinrichtung (72) in dem elektrischen Notbetätigungskreis (23) ermöglicht, mit welchem die Kopplungseinrichtung (72) in die Notbetätigungsstellung überführt wird oder in der Notbetätigungsstellung gehalten wird.

2. Fahrzeugtür-Antriebsbaugruppe (66) nach Anspruch 1, **dadurch gekennzeichnet, dass**
a) die Puffer-Energieversorgung (27) so ausgelegt ist, dass bei Einbruch der Energieversorgung durch die Haupt-Energieversorgung (25) für mindestens 24 Stunden ein Steuersignal für die Kopplungseinrichtung (72) in dem elektrischen Notbetätigungskreis (23) erzeugt werden kann, mit welchem die Kopplungseinrichtung (72) in der Antriebsstellung gehalten werden kann, und/oder
b) die Puffer-Energieversorgung (27) und die Haupt-Energieversorgung (25) so ausgelegt sind, dass
- mittels der elektrischen Leistungsversorgung durch die Haupt-Energieversorgung (25) die Kopplungseinrichtung (72) von der Notbetätigungsstellung in die Antriebsstellung überführt werden kann und
- allein auf Grundlage einer elektrischen Leistungsversorgung durch die Puffer-Energieversorgung (27) bei Einbruch der Energieversorgung durch die Haupt-Energieversorgung (25) eine Überführung der Kopplungseinrichtung (72) von der Notbetätigungsstellung in die Antriebsstellung nicht möglich ist.

3. Fahrzeugtür-Antriebsbaugruppe (66) nach Anspruch 1 oder 2, **dadurch gekennzeichnet, dass**
a) die Haupt-Energieversorgung (25) ein Nenn-Spannungsniveau von 24 V oder 48 V bereitstellt und/oder
b) die Puffer-Energieversorgung (27) eine Nenn-Spannungsniveau von weniger als 15 V bereitstellt.

4. Fahrzeugtür-Antriebsbaugruppe (66) nach einem der vorhergehenden Ansprüche, **dadurch gekennzeichnet, dass** die Kopplungseinrichtung (72) einen Haftmagneten (47) aufweist.

5. Fahrzeugtür-Antriebsbaugruppe (66) nach einem der vorhergehenden Ansprüche, **dadurch gekennzeichnet, dass** der Antriebsstrang (67) als elektromechanischer Antriebsstrang (70) mit einem als elektrischer Motor (15) ausgebildeten Antriebsaggregat (68) und einer mechanischen Antriebsverbindung (73) zwischen einer Abtriebswelle des elektrischen Motors (15) und der Fahrzeugtür (1) ausgebildet ist, wobei die Kopplungseinrichtung (72) als in die mechanische Antriebsverbindung (73) integrierte Kupplung (74) ausgebildet ist.

6. Fahrzeugtür-Antriebsbaugruppe (66) nach einem der Ansprüche 1 bis 4, **dadurch gekennzeichnet, dass** der Antriebsstrang (67) als fluidisch-mechanischer Antriebsstrang (71) mit
a) einem mit einem Motor (15) und einer Pumpe (12) ausgebildeten Antriebsaggregat (68) ausgebildet ist,
b) einem von einem fluidischen Antriebskreis (5) ausgebildeten fluidischen Antriebsverbindung zwischen der Pumpe (12) und mindestens einem Aktuator (6) mit einer ersten fluidischen Druckkammer (8), mit deren Druckbeaufschlagung mittels der Pumpe (12) eine Öffnungsbewegung der Fahrzeugtür (1) herbeiführbar ist, und einer zweiten fluidischen Druckkammer (9), mit deren Druckbeaufschlagung mittels der Pumpe (12) eine Schließbewegung der Fahrzeugtür (1) herbeiführbar ist, ausgebildet ist, und
c) einer mechanischen Antriebsverbindung (73) zwischen dem Aktuator (6) und der Fahrzeugtür (1) ausgebildet ist,
d) wobei die Kopplungseinrichtung (72) als in die mechanische Antriebsverbindung (73) integrierte Kupplung (74) ausgebildet ist.

7. Fahrzeugtür-Antriebsbaugruppe (66) nach Anspruch 5 oder 6, **dadurch gekennzeichnet, dass** die Kupplung (74) als
a) Rutschkupplung ausgebildet ist, wobei über das Steuersignal des elektrischen Notbetätigungskreises (23) die Anpresskraft von Kupplungshälften (75, 76) der Rutschkupplung veränderbar ist, oder
b) eine formschlüssige Kupplung ausgebildet ist, wobei über das Steuersignal des elektrischen Notbetätigungskreises (23) der Formschluss der Kupplungshälften beseitigbar ist.

8. Fahrzeugtür-Antriebsbaugruppe (66) nach einem der Ansprüche 1 bis 4, **dadurch gekennzeichnet, dass**
a) der Antriebsstrang (76) als fluidisch-mechanischer Antriebsstrang (71) mit
aa) einem mit einem Motor (15) und einer Pumpe (12) ausgebildeten Antriebsaggregat (68) ausgebildet ist,
ab) einem von einem fluidischen Antriebskreis (5) ausgebildeten fluidischen Antriebsverbindung zwischen der Pumpe (12) und mindestens einem Aktuator (6) mit einer ersten fluidischen Druckkammer (8), mit deren Druckbeaufschlagung mittels der Pumpe (12) eine Öffnungsbewegung der Fahrzeugtür (1) herbeiführbar ist, und einer zweiten fluidischen Druckkammer (9), mit deren Druckbeaufschlagung mittels der Pumpe (12) eine Schließbewegung der Fahrzeugtür (1) herbeiführbar ist, ausgebildet ist, und
ac) einer mechanischen Antriebsverbindung (73) zwischen dem Aktuator (6) und der Fahrzeugtür (1) ausgebildet ist,
b) wobei die Kopplungseinrichtung (72) als Notbetätigungs-Ventileinrichtung (17) ausgebildet ist, die
ba) in den fluidischen Antriebskreis (5) integriert ist,
bb) eine Schließstellung aufweist, in welcher die Notbetätigungs-Ventileinrichtung (17) eine Kurzschlussverbindung (16) zwischen der ersten Druckkammer (8) und der zweiten Druckkammer (9) verschließt und welche die Antriebsstellung der Kopplungseinrichtung (72) bildet, und
bc) eine Öffnungsstellung aufweist, in welcher durch die Notbetätigungs-Ventileinrichtung (17) die Kurzschlussverbindung (16) zwischen der ersten Druckkammer (8) und der zweiten Druckkammer (9) geöffnet ist und welche die Notbetätigungsstellung der Kopplungseinrichtung (72) bildet.

9. Fahrzeugtür-Antriebsbaugruppe (66) nach Anspruch 8, **dadurch gekennzeichnet, dass**
a) die Notbetätigungs-Ventileinrichtung (17) eine Öffnungsfeder (22) aufweist, welche die Notbetätigungs-Ventileinrichtung (17) in die Öffnungsstellung beaufschlagt, und
b) der elektrische Notbetätigungskreis (23)
ba) ohne Einbruch einer elektrischen Leistungsversorgung und ohne Notbetätigung den elektrischen Steueranschluss (20) der Notbetätigungs-Ventileinrichtung (17) mit einem elektrischen Steuersignal beaufschlagt, mit welchem die Notbetätigungs-Ventileinrichtung (17) entgegen der Wirkung der Öffnungsfeder (22) in der Schließstellung gehalten wird, und
bb) bei Einbruch einer elektrischen Leistungsversorgung und/oder bei einer Notbetätigung den elektrischen Steueranschluss (20) der Notbetätigungs-Ventileinrichtung (17) mit einem elektrischen Steuersignal beaufschlagt, welches zur Folge hat, dass die Notbetätigungs-Ventileinrichtung (17) infolge der Wirkung der Öffnungsfeder (22) in die Öffnungsstellung überführt ist.

10. Fahrzeugtür-Antriebsbaugruppe (66) nach Anspruch 9, **dadurch gekennzeichnet, dass** die Notbetätigungs-Ventileinrichtung (17) einen Haftmagneten (47) aufweist, welcher entgegen der Wirkung der Öffnungsfeder (22) die Schließstellung der Notbetätigungs-Ventileinrichtung (17) sichert.

11. Fahrzeugtür-Antriebsbaugruppe (66) nach einem der Ansprüche 8 bis 10, **dadurch gekennzeichnet, dass** die Notbetätigungs-Ventileinrichtung (17) als singuläre Baueinheit (18) ausgebildet ist mit
a) einem ersten Druckkammeranschluss (41),
b) einem zweiten Druckkammeranschluss (42),
c) einem elektrischen Steueranschluss,
d) einem zwischen dem ersten Druckkammeranschluss (41) und dem zweiten Drucckammeranschluss (42) angeordneten Ventil (43), welches einen Ventilkörper (45) aufweist, der eine Öffnungsstellung und eine Schließstellung aufweist, und
e) einem über den elektrischen Steueranschluss angesteuerten Haftmagneten (47) zur Sicherung der Schließstellung des Ventilkörpers (45).

12. Fahrzeugtür-Antriebsbaugruppe (66) nach Anspruch 11, **dadurch gekennzeichnet, dass** der Ventilkörper (45) über eine Ausgleichsfeder (52) mit einem Haltekörper (51) verbunden ist, auf welchen der Haftmagnet (47) magnetische Haltekräfte ausübt, wobei die Ausgleichsfeder (52) mit einer Annäherung an die Haftstellung des Haltekörpers (51) im Endbereich eines Schließhubs für einen an einen Ventilsitz (46) anliegenden Ventilkörpers (45) eine Relativbewegung des Ventilkörpers (45) gegenüber dem Haltekörper (51) ermöglicht, welche mit einer Erhöhung der Anpresskraft des Ventilkörpers (45) an den Ventilsitz (46) einhergeht.

13. Fahrzeugtür-Antriebsbaugruppe (66) nach Anspruch 12, **dadurch gekennzeichnet, dass** der Haltekörper (51) über die Ausgleichsfeder (52) und einen Ventilstößel (53) mit dem Ventilkörper (45) verbunden ist und sich der Ventilstößel (53) durch den Haftmagneten (47) hindurch erstreckt.

14. Fahrzeugtür-Antriebsbaugruppe (66) nach Anspruch 12 oder 13, **dadurch gekennzeichnet, dass** die Ausgleichsfeder (52) und die Öffnungsfeder (22), welche den Ventilkörper (45) in die Öffnungsstellung beaufschlagt, auf unterschiedlichen Seiten von dem Haftmagneten (47) angeordnet sind.

15. Fahrzeugtür-Antriebsbaugruppe (66) nach einem der Ansprüche 4 bis 14, **dadurch gekennzeichnet, dass** eine Steuereinheit (24) mit Steuerlogik ausgestattet ist, welche eine von der Stellung eines oder des Haltekörpers (51) relativ zu dem Haftmagneten (47) abhängige Induktivität des Haftmagneten (47) auswertet, um zu detektieren, ob sich die Kopplungseinrichtung (72) in der Antriebsstellung oder der Notbetätigungsstellung befindet, und/oder um ein Hubsignal der Kopplungseinrichtung (72) zu erhalten.

## Claims

1. Vehicle door drive assembly (66) for a vehicle door (1) of a vehicle, especially a bus or a train, comprising
a) a drive train (67), via which a closing motion and an opening motion of the vehicle door (1) can be induced and which
aa) comprises a drive unit (68) and
ab) comprises a coupling device (72) actuated via an electric control port (20), where the coupling device (72) depending on how the electric control port (20) is biased takes up
- a drive position, in which a closing motion and/or an opening motion of the vehicle door (1) can be induced via the drive unit (68), and
- an emergency actuation position, in which a closing motion and/or an opening motion of the vehicle door (1) can be induced via a manual emergency actuation device directly biasing the vehicle door (1),
and/or is held in this position and
b) an electric emergency actuation circuit (23) which comprises at least one emergency actuation means (39) and an electric power supply and which controls the control port (20) of the coupling device (72) in such a way that the coupling device (72)
ba) takes up the drive position or is held in the drive position if the electric power supply does not drop and there is no emergency actuation of the emergency actuation means (39) and
bb) takes up the emergency actuation position or is held in the emergency actuation position if there is a drop of electric power supply or there is an emergency actuation of the emergency actuation means (39),
**characterized in that**
c) the electric power supply of the electric emergency actuation circuit (23) is a main energy supply (25) and a buffer energy supply (27) is present that can be charged by the main energy supply (25), where the buffer energy supply (27)
ca) when the electric power supply by the main energy supply (25) drops and there is no emergency actuation of the emergency actuation means (39) still enables producing a control signal for the coupling device (72) in the electric emergency actuation circuit (23), by means of which the coupling device (72) is transferred into the drive position or is held in the drive position,
cb) when the electric power supply by the main energy supply (25) drops and there is an emergency actuation of the emergency actuation means (39) enables producing a control signal for the coupling device (72) in the electric emergency actuation circuit (23), by means of which the coupling device (72) is transferred into the emergency actuation position or is held in the emergency actuation position.

2. Vehicle door drive assembly (66) according to claim 1, **characterized in that**
a) the buffer energy supply (27) is dimensioned in such a way that if the energy supply by the main energy supply (25) drops, a control signal for the coupling device (72) can be produced for at least 24 hours in the electric emergency actuation circuit (23) by means of which the coupling device (72) can be held in the drive position and/or
b) the buffer energy supply (27) and the main energy supply (25) are designed in such a way that
- by means of the electric power supply via the main energy supply (25) the coupling device (72) can be transferred from the emergency actuation position into the drive position and
- it is not possible to transfer the coupling device (72) from the emergency actuation position into the drive position only on the basis of the electric power supply via the buffer energy supply (27) if the energy supply by the main energy supply (25) drops.

3. Vehicle door drive assembly (66) according to claim 1 or 2, **characterized in that**
a) the main energy supply (25) provides a nominal voltage level of 24 V or 48 V and/or
b) the buffer energy supply (27) provides a nominal voltage level of less than 15 V.

4. Vehicle door drive assembly (66) according to one of the proceeding claims, **characterized in that** the coupling device (72) comprises a holding magnet (47).

5. Vehicle door drive assembly (66) according to one of the proceeding claims, **characterized in that** the drive train (67) is realized as an electro mechanical drive train (70) with a drive unit (68) realized as an electric motor (15) and a mechanical drive connection (73) between a output shaft of the electric motor (15) and the vehicle door (1), where the coupling device (72) is realized as a clutch (74) integrated into the mechanical drive connection (73).

6. Vehicle door drive assembly (66) according to one of claims 1 to 4, **characterized in that** the drive train (67) is realized as a fluidic-mechanical drive train (71) comprising
a) a drive unit (68) realized with a motor (15) and a pump (12),
b) a fluidic drive connection realized by a fluidic drive circuit (5), the fluidic drive connection being arranged between the pump (12) and at least one actuator (6), the actuator (6) comprising a first fluidic pressure chamber (8) where by a pressurization of the first pressure chamber (8) by the pump (12) an opening motion of the vehicle door (1) can be induced and the actuator (6) comprising a second fluidic pressure chamber (9) where by a pressurization of the second pressure chamber (9) by the pump (12) a closing motion of the vehicle door (1) can be induced and
c) a mechanical drive connection (73) between the actuator (6) and the vehicle door (1),
d) where the coupling device (72) is realized as a clutch (74) integrated into the mechanical drive connection (73).

7. Vehicle door drive assembly (66) according to claim 5 or 6, **characterized in that** the connector (74) is realized as
a) a torque limited slip clutch, where via the control signal of the electric emergency actuation circuit (23) the normal contact force of clutch halves (75, 76) of the torque limited slip clutch can be changed, or
b) a form-locking clutch, where via the control signal of the electric emergency actuation circuit (23) the form-locking of the clutch halves can be removed.

8. Vehicle door drive assembly (66) according to one of claims 1 to 4, **characterized in that**
a) the drive train (76) is realized as a fluidic-mechanical drive train (71) comprising
aa) a drive unit (68) realized with a motor (15) and a pump (12)
ab) a fluidic drive connection realized by a fluidic drive circuit (5), the fluidic drive connection being arranged between the pump (12) and at least one actuator (6), the actuator (6) comprising a first fluidic pressure chamber (8) where by a pressurization of the first pressure chamber (8) by the pump (12) an opening motion of the vehicle door (1) can be induced and the actuator (6) comprising a second fluidic pressure chamber (9) where by a pressurization of the second pressure chamber (9) by the pump (12) a closing motion of the vehicle door (1) can be induced and
ac) a mechanical drive connection (73) between the actuator (6) and the vehicle door (1),
b) where the coupling device (72) is realized as an emergency actuation valve device (17) which
ba) is integrated into the fluidic drive circuit (5)
bb) comprises a closing position, in which the emergency actuation valve device (17) closes a short-circuit connection (16) between the first pressure chamber (8) and the second pressure chamber (9) and which forms the drive position of the coupling device (72), and
bc) comprises an opening position, in which via the emergency actuation valve device (17) the short-circuit connection (16) between the first pressure chamber (8) and the second pressure chamber (9) is opened and which forms the emergency actuation position of the coupling device (72).

9. Vehicle door assembly (66) according to claim 8, **characterized in that**
a) the emergency actuation valve device (17) comprises an opening spring (22) which biases the emergency actuation valve device (17) into the opening position and
b) the electric emergency actuation circuit (23)
ba) biases the electric control port (20) of the emergency actuation valve device (17) with an electric control signal with which the emergency actuation valve device (17) is held in the closing position against the bias of the opening spring (22) when there is no drop of an electric power supply and no emergency actuation and
bb) biases the electric control port (20) of the emergency actuation valve device (17) with an electric control signal, which results in the emergency actuation valve device (17) being brought into the opening position due to the bias of the opening spring (22), when the electric power supply drops and/or there is an emergency actuation.

10. Vehicle door drive assembly (66) according to claim 9, **characterized in that** the emergency actuation valve device (17) comprises a holding magnet (47), which against the bias by the opening spring (22) secures the closing position of the emergency actuation valve device (17).

11. Vehicle door drive assembly (66) according to one of claims 8 to 10, **characterized in that** the emergency actuation valve device (17) is realized as a singular construction unit (18) comprising
a) a first pressure chamber port (41),
b) a second pressure chamber port (42),
c) an electric control port,
d) a valve (43) arranged between the first pressure chamber port (41) and the second pressure chamber port (42) and comprising a valve body (45) having an opening position and a closing position, and
e) a holding magnet (47) controlled via the electric control port for securing the closing position of the valve body (45).

12. Vehicle door drive assembly (66) according to claim 11, **characterized in that** the valve body (45) is connected via a compensating spring (52) to a holding body (51) onto which the holding magnet (47) exerts magnetic holding forces, where the compensating spring (52) enables relative motion of the valve body (45) with respect to the holding body (51) when the holding position of the holding body (51) wherein the valve body (45) rests against a valve seat (46) in an end portion of a closing stroke is approached, which relative motion goes along with an increase of the contact force of the valve body (45) with the valve seat (46).

13. Vehicle door drive assembly (66) according to claim 12, **characterized in that** the holding body (51) is connected to the valve body (45) via the compensating spring (52) and a valve plunger (53) and the valve plunger (53) extends through the holding magnet (47).

14. Vehicle door drive assembly (66) according to claim 12 or 13, **characterized in that** the buffer spring (52) and the opening spring (22), which biases the valve body (45) into the opening position, are arranged on different sides of the holding magnet (47).

15. Vehicle door drive assembly (66) according to one of claims 4 to 14, **characterized in that** a control unit (24) is equipped with control logic, which analyses an inductivity of the holding magnet (47) being dependent on the position of a or the holding body (51) relative to the holding magnet (47) in order to detect whether the coupling device (72) is in the drive position or in the emergency actuation position and/or in order to receive a lift signal of the coupling device (72).

## Revendications

1. Sous-ensemble d'entraînement de porte de véhicule (66) pour une porte de véhicule (1) d'un véhicule, plus particulièrement d'un bus ou d'un véhicule ferroviaire, avec
a) un groupe motopropulseur (67), par l'intermédiaire duquel un mouvement de fermeture et un mouvement d'ouverture de la porte (1) peut être effectué et qui comprend
aa) un groupe moteur (68) et
ab) un dispositif de couplage (72) actionné par l'intermédiaire d'un raccordement de commande électrique (20), qui adopte, selon la sollicitation du raccordement de commande électrique (20),
- une position d'entraînement, dans laquelle un mouvement de fermeture et/ou un mouvement d'ouverture de la porte de véhicule (1) peut être effectué par l'intermédiaire du groupe moteur (68) et
- une position d'actionnement d'urgence, dans laquelle un mouvement de fermeture et/ou un mouvement d'ouverture de la porte de véhicule (1) peut être effectué par l'intermédiaire d'un actionnement d'urgence manuelle agissant manuellement directement sur la porte de véhicule (1),
et/ou est maintenu dans celle-ci et
b) un circuit électrique d'actionnement d'urgence (23) qui comprend au moins un organe d'actionnement d'urgence (39) et une alimentation de puissance électrique et qui contrôle le raccordement de commande (20) du dispositif de couplage (72) de façon à ce que le dispositif de couplage (72)
ba) adopte la position d'entraînement ou soit maintenu dans la position d'entraînement lorsqu'il n'existe aucune chute de l'alimentation en puissance électrique et lorsqu'il n'existe aucun actionnement d'urgence de l'organe d'actionnement d'urgence (39) et
bb) adopte la position d'actionnement d'urgence ou soit maintenu dans la position d'actionnement d'urgence lorsqu'il existe une chute de l'alimentation en puissance électrique ou lorsqu'il existe un actionnement d'urgence de l'organe d'actionnement d'urgence (39),
**caractérisé en ce que**
c) l'alimentation en puissance électrique du circuit électrique d'actionnement d'urgence (23) est une alimentation principale (25) et il existe une alimentation tampon (27), pouvant être chargée par l'alimentation principale (25) du véhicule, qui
ca) lors d'une chute de l'alimentation en puissance électrique par l'alimentation principale (25), sans actionnement d'urgence de l'organe d'actionnement d'urgence (39), permet encore la génération d'un signal de commande pour le dispositif de couplage (72) dans le circuit d'actionnement d'urgence (23), avec lequel le dispositif de couplage (72) est amené dans la position d'entraînement ou est maintenu dans la position d'entraînement,
cb) lors d'une chute de l'alimentation en puissance électrique par l'alimentation principale (25) et lors d'un actionnement d'urgence de l'organe d'actionnement d'urgence (39), permet la génération d'un signal de commande pour le dispositif de couplage (72) dans le circuit d'actionnement d'urgence (23), avec lequel le dispositif de couplage (72) est amené dans la position d'actionnement d'urgence ou est maintenu dans la position d'actionnement d'urgence.

2. Sous-ensemble d'entraînement de porte de véhicule (66) selon la revendication 1, **caractérisé en ce que**
a) l'alimentation tampon (27) est conçue de façon à ce que, lors d'une chute de l'alimentation par l'alimentation principale (25) pendant au moins 24 heures, un signal de commande pour le dispositif de couplage (72) peut être généré dans le circuit électrique d'actionnement d'urgence (23), avec lequel le dispositif de couplage (72), peut être maintenu dans la position d'entraînement et/ou
b) l'alimentation tampon (27) et l'alimentation principale (25) sont conçues de façon à ce que
- au moyen de l'alimentation en puissance électrique par l'alimentation principale (25), le dispositif de couplage (72) puisse être amené de la position d'actionnement d'urgence vers la position d'entraînement et
- sur la seule base d'une alimentation en puissance électrique par l'alimenta tampon (27), lors d'une chute de l'alimentation par l'alimentation principale (25), un passage du dispositif de couplage (72) de la position d'actionnement d'urgence à la position d'entraînement ne soit pas possible.

3. Sous-ensemble d'entraînement de porte de véhicule (66) selon la revendication 1 ou 2, **caractérisé en ce que**
a) l'alimentation principale (25) met à disposition un niveau de tension nominale de 24 V ou de 48 V et/ou
b) l'alimentation tampon (27) met à disposition un niveau de tension nominale inférieur à 15 V.

4. Sous-ensemble d'entraînement de porte de véhicule (66) selon l'une des revendications précédentes, **caractérisé en ce que** le dispositif de couplage (72) comprend un aimant de retenue (47).

5. Sous-ensemble d'entraînement de porte de véhicule (66) selon l'une des revendications précédentes, **caractérisé en ce que** le groupe motopropulseur (67) est conçu comme un groupe motopropulseur électromécanique (70) avec un groupe moteur (68) conçu comme un moteur électrique (15) et une liaison d'entraînement mécanique (73) entre un arbre d'entraînement du moteur électrique (15) et la porte de véhicule (1), le dispositif de couplage (72) étant conçu comme un couplage (74) intégré dans la liaison d'entraînement mécanique (73).

6. Sous-ensemble d'entraînement de porte de véhicule (66) selon l'une des revendications précédentes, **caractérisé en ce que** le groupe motopropulseur (67) est conçu comme un groupe motopropulseur fluidique-mécanique (71) avec
a) un groupe moteur (68) réalisé avec un moteur (15) et une pompe (12),
b) une liaison d'entraînement fluidique, constituée d'un circuit d'entraînement fluidique (5), entre la pompe (12) et au moins un actionneur (6) avec une première chambre de pression fluidique (8), dont la sollicitation en pression au moyen de la pompe (12) permet de provoquer un mouvement d'ouverture de la porte de véhicule (1), et une deuxième chambre de pression fluidique (9), dont la sollicitation en pression au moyen de la pompe (12) permet de provoquer un mouvement de fermeture de la porte de véhicule (1) et
c) une liaison d'entraînement mécanique (73) entre l'actionneur (6) et la porte de véhicule (1),
d) le dispositif de couplage (72) étant conçu comme un couplage (74) intégré dans la liaison d'entraînement mécanique (73).

7. Sous-ensemble d'entraînement de porte de véhicule (66) selon la revendication 5 ou 6, **caractérisé en ce que** le couplage (74) est conçu
a) comme un couplage à glissement, le signal de commande du circuit électrique d'actionnement d'urgence (23) permettant de faire varier la force de pression des moitiés de couplage (75, 76) de l'accouplement à glissement ou
b) comme un couplage par complémentarité de forme, le signal de commande du circuit électrique d'actionnement d'urgence (23) permettant de détacher la complémentarité de forme des moitiés de couplage.

8. Sous-ensemble d'entraînement de porte de véhicule (66) selon l'une des revendications 1 à 4, **caractérisé en ce que**
a) le groupe motopropulseur (76) est conçu comme un groupe motopropulseur fluidique-mécanique (71) avec
aa) un groupe moteur (68) constitué d'un moteur (15) et d'une pompe (12),
ab) une liaison d'entraînement fluidique, constituée d'un circuit d'entraînement fluidique (5), entre la pompe (12) et au moins un actionneur (6), avec une première chambre de pression fluidique (8), dont la sollicitation en pression au moyen de la pompe (12) permet de provoquer un mouvement d'ouverture de la porte de véhicule (1) et une deuxième chambre de pression fluidique (9), dont la sollicitation en pression au moyen de la pompe (12) permet de provoquer un mouvement de fermeture de la porte de véhicule (1) et
ac) une liaison d'entraînement mécanique (73) entre l'actionneur (6) et la porte de véhicule (1).
b) le dispositif de couplage (72) étant conçu comme un dispositif à soupape d'actionnement d'urgence (17) qui
ba) est intégré dans le circuit d'entraînement fluidique (5),
bb) comprend une position de fermeture dans laquelle le dispositif à soupape d'actionnement d'urgence (17) ferme une liaison de court-circuit (16) entre la première chambre de pression (8) et la deuxième chambre de pression (9) et qui constitue la position d'entraînement du dispositif de couplage (72) et
bc) comprend une position d'ouverture dans laquelle le dispositif à soupape d'actionnement d'urgence (17) permet d'ouvrir la liaison de court-circuit (16à entre la première chambre de pression (8) et la deuxième chambre de pression (9) et qui constitue la position d'actionnement d'urgence du dispositif de couplage (72).

9. Sous-ensemble d'entraînement de porte de véhicule (66) selon la revendication 8, **caractérisé en ce que**
a) le dispositif à soupape d'actionnement d'urgence (17) comprend un ressort d'ouverture (22) qui sollicite le dispositif à soupape d'actionnement d'urgence (17) dans la position d'ouverture et
b) le circuit électrique d'actionnement d'urgence (23)
ba) sans la chute de l'alimentation en puissance électrique et sans actionnement d'urgence du raccordement de commande électrique (20) du dispositif à soupape d'actionnement d'urgence (17), est sollicité avec un signal de commande électrique avec lequel le dispositif à soupape d'actionnement d'urgence (17) est maintenu dans la position de fermeture contre l'action du ressort d'ouverture (22) et
bb) lors d'une chute d'une alimentation en puissance électrique et/ou lors d'un actionnement d'urgence, sollicite le raccordement de commande électrique (20) du dispositif à soupape d'actionnement d'urgence (17) avec un signal de commande électrique qui a pour conséquence que le dispositif à soupape d'actionnement d'urgence (17) est amené, du fait de l'action du ressort d'ouverture (22), dans la position d'ouverture.

10. Sous-ensemble d'entraînement de porte de véhicule (66) selon la revendication 9, **caractérisé en ce que** le dispositif à soupape d'actionnement d'urgence (17) comprend un aimant de retenue (47) qui sécurise, à l'encontre de l'action du ressort d'ouverture (22), la position de fermeture du dispositif à soupape d'actionnement d'urgence (17).

11. Sous-ensemble d'entraînement de porte de véhicule (66) selon la revendication 8 à 10, **caractérisé en ce que** le dispositif à soupape d'actionnement d'urgence (17) est conçu comme un module singulier (18) avec
a) un premier raccordement de chambre de pression (41),
b) un deuxième raccordement de chambre de pression (42),
c) un raccordement de commande électrique,
d) une soupape (43), disposée entre le premier raccordement de chambre de pression (41) et le deuxième raccordement de chambre de pression (42), qui comprend un corps de soupape (45) qui présente une position d'ouverture et une position de fermeture et
e) un aimant de retenue (47), contrôlé par l'intermédiaire du raccordement de commande électrique, pour la sécurisation de la position de fermeture du corps de soupape (45).

12. Sous-ensemble d'entraînement de porte de véhicule (66) selon la revendication 11, **caractérisé en ce que** le corps de soupape (45) est relié par l'intermédiaire d'un ressort de compensation (52), avec un corps de maintien (51), sur lequel l'aimant de retenue (47) exerce des forces de maintien magnétiques, le ressort de compensation (52) permettant, lors d'une approche de la position de retenue du corps de maintien (51) dans la zone d'extrémité d'une course de fermeture pour un corps de soupape (45) s'appuyant contre un siège de soupape (46), un mouvement relatif du corps de soupape (45) par rapport au corps de maintien (51), qui se combine avec une augmentation de la force de pression du corps de soupape (45) contre le siège de soupape (46).

13. Sous-ensemble d'entraînement de porte de véhicule (66) selon la revendication 12, **caractérisé en ce que** le corps de maintien (51) est relié par l'intermédiaire du ressort de compensation (52) et d'un poussoir de soupape (53) avec le corps de soupape (45) et le poussoir de soupape (53) s'étend à travers l'aimant de retenue (47).

14. Sous-ensemble d'entraînement de porte de véhicule (66) selon la revendication 12 ou 13, **caractérisé en ce que** le ressort de compensation (52) et le ressort d'ouverture (22), qui sollicite le corps de soupape (45) vers la position d'ouverture, sont disposés sur des côtés différents de l'aimant de retenue (47).

15. Sous-ensemble d'entraînement de porte de véhicule (66) selon l'une des revendications 4 à 14, **caractérisé en ce qu'**une unité de commande (24) est équipée d'une logique de commande qui analyse une inductance de l'aimant de retenue (47), qui dépend de la position d'un ou du corps de maintien (51) par rapport à l'aimant de retenue (47), afin de détecter si le dispositif de couplage (72) se trouve dans la position d'entraînement ou dans la position d'actionnement d'urgence, et/ou afin d'obtenir un sinal de course du dispositif de couplage (72).
